(19) **Europäisches Patentamt / European Patent Office / Office européen des brevets**

(11) **EP 4 681 801 A1**

(12) **EUROPEAN PATENT APPLICATION**
published in accordance with Art. 153(4) EPC

(43) Date of publication:
**21.01.2026 Bulletin 2026/04**

(21) Application number: **24770949.6**

(22) Date of filing: **13.03.2024**

(51) International Patent Classification (IPC):
**B01D 53/22** (2006.01)  **B01D 61/58** (2006.01)

(52) Cooperative Patent Classification (CPC):
**B01D 53/22; B01D 61/58**

(86) International application number:
**PCT/JP2024/009898**

(87) International publication number:
**WO 2024/190846 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.03.2023 JP 2023041659**

(71) Applicant: **Nitto Denko Corporation
Osaka 567-8680 (JP)**

(72) Inventors:
• **KATAGIRI, Makoto**
  **Ibaraki-shi, Osaka 567-8680 (JP)**
• **FUKUMURA, Takuya**
  **Ibaraki-shi, Osaka 567-8680 (JP)**

(74) Representative: **Hoffmann Eitle
Patent- und Rechtsanwälte PartmbB
Arabellastraße 30
81925 München (DE)**

(54) **GAS SEPARATION SYSTEM, AND MIXED GAS SEPARATION METHOD**

(57) The present invention provides a new gas separation system and a new gas mixture separation method that are suitable for achieving both reduction of the recovery power and reduction of the membrane area. A gas separation system (100) of the present invention includes: a first separation membrane unit (10) accommodating a first separation membrane (11) that separates a gas mixture (S1) into a first permeated gas (S2) and a first non-permeated gas (S3); a second separation membrane unit (20) accommodating a second separation membrane (21) that separates the first permeated gas (S2) into a second permeated gas (S4) and a second non-permeated gas (S5); a depressurizing device (30) that depressurizes a permeation-side space of the first separation membrane unit (10); and a pressurizing device (40) that pressurizes a feed-side space of the second separation membrane unit (20). The gas mixture (S1) contains a first gas and a second gas different from the first gas. The first separation membrane (11) and the second separation membrane (21) are preferentially permeable to the second gas, and a separation factor $\alpha_1$ of the first separation membrane (11) and a separation factor $\alpha_2$ of the second separation membrane (21) satisfy $\alpha_1 < \alpha_2$.

FIG. 1

**Description**

TECHNICAL FIELD

The present invention relates to a gas separation system and a gas mixture separation method.

BACKGROUND ART

At factories, power plants, etc., gas mixtures containing carbon dioxide, nitrogen, and the like are discharged from combustion apparatuses, for example. From the viewpoint of environmental regulation, it is desirable to separate each component from the gas mixtures and recover them.

A membrane separation method was developed as a method for separating each component from a gas mixture. The membrane separation method allows efficient separation of each component with a suppressed operation cost, compared with an absorption method in which an absorbent absorbs and separates a specific component contained in a gas mixture.

In the membrane separation method, a gas separation system including a combination of a plurality of separation membrane units is used sometimes. For example, Patent Literature 1 discloses a two-stage separation membrane system including depressurization type separation membrane units configured in two stages (FIG. 7 in Patent Literature 1). $CO_2$, $SO_2$, and $No_x$ are removed from a gas discharged from a boiler in the first-stage separation membrane unit, and subsequently $CO_2$ and $SO_2$ are separated in the second-stage separation membrane unit.

CITATION LIST

Patent Literature

Patent Literature 1: JP 2020-501884 A

SUMMARY OF INVENTION

Technical Problem

The two-stage separation membrane system described in Patent Literature 1 adopts depressurization type separation membrane units configured in two stages for separation of a gas discharged from a boiler. The system configuration of Patent Literature 1 can contribute to reduction of the recovery power required to separate a discharged gas. However, the system configuration of Patent Literature 1 requires a large total membrane area, and that makes it difficult to reduce the size of the whole system.

The present invention aims to provide a new gas separation system and a new gas mixture separation method that are suitable for achieving both reduction of the recovery power and reduction of the membrane area.

Solution to Problem

The present inventors discussed whether it is possible to reduce the recovery power and the required membrane area by adopting the pressurization type for a second-stage separation membrane unit of a two-stage gas separation system including a combination of two separation membrane units. As a result, the present inventors newly found that both reduction of the recovery power and reduction of the membrane area can be achieved by adjusting separation factors a of separation membranes included in two separation membrane units. The present inventors made further studies on the basis of this finding and have completed the present invention.

In one aspect, the present invention provides a gas separation system including:

a first separation membrane unit accommodating a first separation membrane that separates a gas mixture into a first permeated gas and a first non-permeated gas;
a second separation membrane unit accommodating a second separation membrane that separates the first permeated gas into a second permeated gas and a second non-permeated gas;
a depressurizing device that depressurizes a permeation-side space of the first separation membrane unit; and
a pressurizing device that pressurizes a feed-side space of the second separation membrane unit, wherein
the gas mixture contains a first gas and a second gas different from the first gas,
the first separation membrane and the second separation membrane are preferentially permeable to the second gas, and

a separation factor $\alpha_1$ of the first separation membrane for the second gas with respect to the first gas and a separation factor $\alpha_2$ of the second separation membrane for the second gas with respect to the first gas satisfy $\alpha_4 < \alpha_2$, the separation factors $\alpha_1$ and $\alpha_2$ being determined by a test below.

Test: A test piece is fabricated from the first separation membrane or the second separation membrane. An operation is performed in which a test gas composed of the first gas and the second gas is supplied to a space adjacent to one surface of the test piece while a space adjacent to the other surface of the test piece is depressurized. The separation factor $\alpha_1$ or $\alpha_2$ is determined on the basis of a result of the operation. In the operation, a content of the second gas in the test gas is 50 vol% under standard conditions, the test gas supplied to the space adjacent to the one surface has a temperature of 30°C and a pressure of 0.1 MPa, and the space adjacent to the other surface is depressurized to reduce a pressure in the space adjacent to the other surface to 0.1 MPa below an atmospheric pressure in a measurement environment.

In another aspect, the present invention provides a gas mixture separation method including:

a first separation step of separating a gas mixture into a first permeated gas and a first non-permeated gas by supplying the gas mixture to a first separation membrane unit and depressurizing a permeation-side space of the first separation membrane unit, the first separation membrane unit accommodating a first separation membrane; and
a second separation step of separating the first non-permeated gas into a second permeated gas and a second non-permeated gas by supplying the first permeated gas to a second separation membrane unit and pressurizing a feed-side space of the second separation membrane unit, the second separation membrane unit accommodating a second separation membrane, wherein
the gas mixture contains a first gas and a second gas different from the first gas,
the first separation membrane and the second separation membrane are preferentially permeable to the second gas, and
a separation factor $\alpha_1$ of the first separation membrane for the second gas with respect to the first gas and a separation factor $\alpha_2$ of the second separation membrane for the second gas with respect to the first gas satisfy $\alpha_4 < \alpha_2$, the separation factors $\alpha_1$ and $\alpha_2$ being determined by a test below.

Test: A test piece is fabricated from the first separation membrane or the second separation membrane. An operation is performed in which a test gas composed of the first gas and the second gas is supplied to a space adjacent to one surface of the test piece while a space adjacent to the other surface of the test piece is depressurized. The separation factor $\alpha_1$ or $\alpha_2$ is determined on the basis of a result of the operation. In the operation, a content of the second gas in the test gas is 50 vol% under standard conditions, the test gas supplied to the space adjacent to the one surface has a temperature of 30°C and a pressure of 0.1 MPa, and the space adjacent to the other surface is depressurized to reduce a pressure in the space adjacent to the other surface to 0.1 MPa below an atmospheric pressure in a measurement environment.

Advantageous Effects of Invention

According to the present invention, a new gas separation system and a new gas mixture separation method that are suitable for achieving both reduction of the recovery power and reduction of the membrane area can be provided.

BRIEF DESCRIPTION OF DRAWINGS

FIG. 1 is a schematic configuration diagram showing a gas separation system according to one embodiment of the present invention.
FIG. 2 is a schematic cross-sectional view showing an example of a first separation membrane unit.
FIG. 3 is a cross-sectional view schematically showing an example of a first separation membrane.
FIG. 4 is a schematic cross-sectional view showing an example of a second separation membrane unit.
FIG. 5 is a cross-sectional view schematically showing an example of a second separation membrane.
FIG. 6 is a perspective view schematically showing another example of the first separation membrane unit.
FIG. 7 is a schematic configuration diagram showing a modification of the gas separation system.
FIG. 8 is a schematic configuration diagram illustrating a gas separation system used in Calculation Examples 5 to 8.
FIG. 9 is a schematic configuration diagram illustrating a gas separation system used in Calculation Examples 9 to 12 and Calculation Example 23.

DESCRIPTION OF EMBODIMENTS

A gas separation system according to a first embodiment of the present invention includes:

a first separation membrane unit accommodating a first separation membrane that separates a gas mixture into a first permeated gas and a first non-permeated gas;
a second separation membrane unit accommodating a second separation membrane that separates the first permeated gas into a second permeated gas and a second non-permeated gas;
a depressurizing device that depressurizes a permeation-side space of the first separation membrane unit; and
a pressurizing device that pressurizes a feed-side space of the second separation membrane unit, wherein
the gas mixture contains a first gas and a second gas different from the first gas,
the first separation membrane and the second separation membrane are preferentially permeable to the second gas, and
a separation factor $\alpha_1$ of the first separation membrane for the second gas with respect to the first gas and a separation factor $\alpha_2$ of the second separation membrane for the second gas with respect to the first gas satisfy $\alpha_1 < \alpha_2$, the separation factors $\alpha_1$ and $\alpha_2$ being determined by a test below.

Test: A test piece is fabricated from the first separation membrane or the second separation membrane. An operation is performed in which a test gas composed of the first gas and the second gas is supplied to a space adjacent to one surface of the test piece while a space adjacent to the other surface of the test piece is depressurized. The separation factor $\alpha_1$ or $\alpha_2$ is determined on the basis of a result of the operation. In the operation, a content of the second gas in the test gas is 50 vol% under standard conditions, the test gas supplied to the space adjacent to the one surface has a temperature of 30°C and a pressure of 0.1 MPa, and the space adjacent to the other surface is depressurized to reduce a pressure in the space adjacent to the other surface to 0.1 MPa below an atmospheric pressure in a measurement environment.

According to a second aspect of the present invention, for example, in the gas separation system according to the first aspect, a content of the second gas in the gas mixture is 30 vol% or less.

According to a third aspect of the present invention, for example, in the gas separation system according to the first or second aspect, the gas mixture contains nitrogen as the first gas and carbon dioxide as the second gas.

According to a fourth aspect of the present invention, for example, in the gas separation system according to any one of the first to third aspects, a membrane area of the first separation membrane is larger than a membrane area of the second separation membrane.

According to a fifth aspect of the present invention, for example, the gas separation system according to any one of the first to fourth aspects satisfies $10 \le \alpha_2 - \alpha_1 \le 30$.

According to a sixth aspect of the present invention, for example, the gas separation system according to any one of the first to fifth aspects satisfies $10 \le \alpha_1 \le 30$.

According to a seventh aspect of the present invention, for example, the gas separation system according to any one of the first to sixth aspects is a continuous-type system.

According to an eighth aspect of the present invention, for example, the gas separation system according to any one of the first to seventh aspects further includes a permeated gas feed passage connected to the first separation membrane unit and the second separation membrane unit and configured to supply the first permeated gas to the second separation membrane unit, wherein the depressurizing device and the pressurizing device are disposed in the permeated gas feed passage.

According to a ninth aspect of the present invention, for example, the gas separation system according to any one of the first to eighth aspects further includes: a gas mixture feed passage connected to the first separation membrane unit and configured to supply the gas mixture to the first separation membrane unit; and a discharge passage connected to the second separation membrane unit and configured to discharge the second non-permeated gas from the second separation membrane unit, wherein the discharge passage joins the gas mixture feed passage at a joining point.

A gas mixture separation method according to a tenth aspect of the present invention includes:

a first separation step of separating a gas mixture into a first permeated gas and a first non-permeated gas by supplying the gas mixture to a first separation membrane unit and depressurizing a permeation-side space of the first separation membrane unit, the first separation membrane unit accommodating a first separation membrane; and
a second separation step of separating the first non-permeated gas into a second permeated gas and a second non-permeated gas by supplying the first permeated gas to a second separation membrane unit and pressurizing a feed-side space of the second separation membrane unit, the second separation membrane unit accommodating a second separation membrane, wherein
the gas mixture contains a first gas and a second gas different from the first gas,
the first separation membrane and the second separation membrane are preferentially permeable to the second gas, and

a separation factor $\alpha_1$ of the first separation membrane for the second gas with respect to the first gas and a separation factor $\alpha_2$ of the second separation membrane for the second gas with respect to the first gas satisfy $\alpha_4 < \alpha_2$, the separation factors $\alpha_1$ and $\alpha_2$ being determined by a test below.

Test: A test piece is fabricated from the first separation membrane or the second separation membrane. An operation is performed in which a test gas composed of the first gas and the second gas is supplied to a space adjacent to one surface of the test piece while a space adjacent to the other surface of the test piece is depressurized. The separation factor $\alpha_1$ or $\alpha_2$ is determined on the basis of a result of the operation. In the operation, a content of the second gas in the test gas is 50 vol% under standard conditions, the test gas supplied to the space adjacent to the one surface has a temperature of 30°C and a pressure of 0.1 MPa, and the space adjacent to the other surface is depressurized to reduce a pressure in the space adjacent to the other surface to 0.1 MPa below an atmospheric pressure in a measurement environment.

According to an eleventh aspect of the present invention, for example, in the gas mixture separation method according to the tenth aspect, a content of the second gas in the gas mixture is 30 vol% or less.

According to a twelfth aspect of the present invention, for example, in the gas mixture separation method according to the tenth or eleventh aspect, the gas mixture contains nitrogen as the first gas and carbon dioxide as the second gas.

The present invention will be described hereinafter in detail. The following description is not intended to limit the present invention to a specific embodiment.

<Gas Separation System>

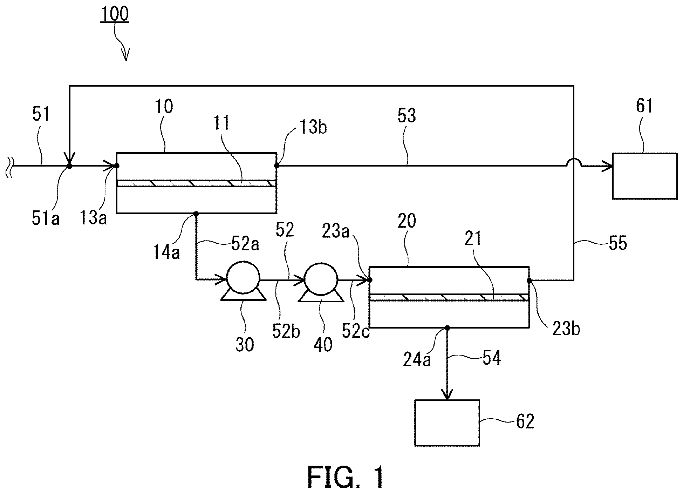

FIG. 1 is a schematic configuration diagram showing a gas separation system 100 according to one embodiment of the present invention. As shown in FIG. 1, the gas separation system 100 of the present embodiment includes a first separation membrane unit 10, a second separation membrane unit 20, a depressurizing device 30, and a pressurizing device 40. The first separation membrane unit 10 accommodates a first separation membrane 11, and the second separation membrane unit 20 accommodates a second separation membrane 21. The first separation membrane unit 10 is a membrane separation device that performs membrane separation for a gas mixture using the first separation membrane 11. The first separation membrane 11 can separate the gas mixture into a first permeated gas and a first non-permeated gas. The second separation membrane unit 20 is a membrane separation device that performs membrane separation, using the second separation membrane 21, for the first permeated gas discharged from the first separation membrane unit 10. The second separation membrane 21 can separate the first permeated gas into a second permeated gas and a second non-permeated gas.

The gas mixture to be processed in the first separation membrane unit 10 contains a first gas and a second gas different from the first gas. Examples of the first gas and the second gas include hydrogen and carbon dioxide. For example, the gas mixture may contain nitrogen as the first gas and carbon dioxide as the second gas.

A gas mixture to be processed in the first separation membrane unit 10 may contain moisture ($H_2O$). The gas mixture may be a moisture-saturated gas.

In the present embodiment, the first separation membrane 11 and the second separation membrane 21 are both preferentially permeable to the second gas. Therefore, the first permeated gas separated by the first separation membrane 11 has a higher second gas content than that in the gas mixture and a lower first gas content than that in the gas mixture. In contrast, the first non-permeated gas has a lower second gas content than that in the gas mixture and a higher first gas content than that in the gas mixture. The second permeated gas separated by the second separation membrane 21 has a higher second gas content than that in the first non-permeated gas and a lower first gas content than that in the first non-permeated gas. The second non-permeated gas has a higher second gas content of the than that in the first non-permeated gas and a lower first gas content than that in the first non-permeated gas.

In the gas separation system 100, a separation factor $\alpha_1$ of the first separation membrane 11 for the second gas with respect to the first gas and a separation factor $\alpha_2$ of the second separation membrane 21 for the second gas with respect to the first gas satisfy $\alpha_1 < \alpha_2$, the separation factors $\alpha_1$ and $\alpha_2$ being determined by a test below.

Test: A test piece is fabricated from the first separation membrane 11 or the second separation membrane 21. An operation is performed in which a test gas composed of the first gas and the second gas is supplied to a space adjacent to one surface of the test piece while a space adjacent to the other surface of the test piece is depressurized. The separation factor $\alpha_1$ or $\alpha_2$ is determined on the basis of a result of the operation. In the operation, a content of the second gas in the test gas is 50 vol% under standard conditions, the test gas supplied to the space adjacent to the one surface has a temperature of 30°C and a pressure of 0.1 MPa, and the space adjacent to the other surface is depressurized to reduce a pressure in the space adjacent to the other surface to 0.1 MPa below an atmospheric pressure in a measurement environment.

In the above test, the test piece can be fabricated, for example, by cutting the first separation membrane 11 or the second separation membrane 21 into a disc having a diameter of 20 mm. The discoid test piece may have a diameter of 20 mm or more.

The separation operation of the above test can be performed, for example, by the following method. First, the test piece is set in a metal cell, which is then sealed with an O-ring so that no leakage will occur. The test gas is injected into a space (feed-side space) in the metal cell to have contact with one principal surface (e.g., a principal surface 11a or 21a described later) of the test piece. As described above, the content of the second gas in the test gas to be injected into the feed-side space is 50 vol% under the standard conditions (0°C, 101 kPa). The test gas has a temperature of 30°C and a pressure of 0.1 MPa. In the present description, the term "pressure" refers to the absolute pressure, unless otherwise described.

Next, a space (permeation-side space) in the metal cell is depressurized using a vacuum pump, the space being adjacent to the other principal surface (e.g., a principal surface 11b or 21b described later) of the test piece. In this process, the permeation-side space is depressurized to reduce the pressure in the space to 0.1 MPa below the atmospheric pressure in the measurement environment. As a result, a permeated fluid having permeated through the test piece is obtained in the permeation-side space. The separation factor a of the test piece can be calculated from a weight of the permeated fluid, a volume rate of the second gas and that of the first gas in the permeated fluid, etc. Specifically, the separation factor $\alpha_1$ (second gas/first gas) of the first separation membrane 11 can be calculated by performing the above separation operation using a test piece fabricated from the first separation membrane 11, and the separation factor $\alpha_2$ (second gas/first gas) of the second separation membrane 21 can be calculated by performing the above separation operation using a test piece fabricated from the second separation membrane 21.

Specifically, the separation factor a can be calculated by the following equation. To calculate the separation factor $\alpha_1$ (second gas/first gas) of the first separation membrane 11 and the separation factor $\alpha_2$ (second gas/first gas) of the second separation membrane 21, in the following equation, $X_2$ and $X_1$ are respectively a volume rate of the second gas and a volume rate of the first gas in the test gas, and $Y_2$ and $Y_1$ are respectively the volume rate of the second gas and the volume rate of the first gas in the permeated fluid having permeated through the test piece. These volume rates are values determined under the standard conditions (0°C, 101 kPa).

$$\text{Separation factor } \alpha = (Y_2/Y_1)/(X_2/X_1)$$

The depressurizing device 30 can depressurize the permeation-side space of the first separation membrane unit 10. In other words, the depressurizing device 30 can create a pressure difference or increase a pressure difference between the feed-side space and the permeation-side space of the first separation membrane unit 10. A specific example of the depressurizing device 30 is a pump. The depressurizing device 30 is preferably a vacuum device, such as a vacuum pump. The vacuum pump is typically a gas transport vacuum pump, and is, for example, a reciprocating vacuum pump, a rotary vacuum pump, or the like. Examples of the reciprocating vacuum pump include a diaphragm vacuum pump and a rocking piston vacuum pump. Examples of the rotary vacuum pump include: a liquid seal pump; an oil rotary pump (a rotary pump); a mechanical booster pump; and various kinds of dry pumps, such as a roots dry pump, a claw dry pump, a screw dry pump, a turbo dry pump, and a scroll dry pump. The pump as the depressurizing device 30 may include a variable speed mechanism for changing the rotational speed, etc. An example of the variable speed mechanism is an inverter that drives a motor of the pump. The pressure in the permeation-side space of the first separation membrane unit 10 can be adjusted as appropriate by controlling the rotational speed, etc. of the pump using the variable speed mechanism.

The depressurizing device 30 may be an assembly of a plurality of the pumps. That is, the depressurizing device 30 may be configured to be capable of depressurizing the permeation-side space of the first separation membrane unit 10 using each of the pumps. In this case, the pressure in the permeation-side space of the first separation membrane unit 10 can be adjusted as appropriate by adjusting the number of operating pumps.

The pressurizing device 40 can pressurize the feed-side space of the second separation membrane unit 20. In other words, the pressurizing device 40 can create a pressure difference or increase a pressure difference between the feed-side space and the permeation-side space of the second separation membrane unit 20. A specific example of the pressurizing device 40 is a pump. The pressurizing device 40 may be a pump that pumps the first permeated gas toward the feed-side space of the second separation membrane unit 20. The pump is typically a gas transport pressure pump, and is, for example, a reciprocating pressure pump or a rotary pressure pump. Examples of the reciprocating pressure pump include a diaphragm pump and a rocking piston pump. Examples of the rotary pump include: a liquid seal pump; an oil rotary pump (a rotary pump); a mechanical booster pump; and various kinds of dry pumps, such as a roots dry pump, a claw dry pump, a screw dry pump, a turbo dry pump, and a scroll dry pump. The pump as the pressurizing device 40 may include a variable speed mechanism for changing the rotational speed, etc. An example of the variable speed mechanism is an inverter that drives a motor of the pump. The pressure in the feed-side space of the second separation membrane unit 20 can be adjusted as appropriate by controlling the rotational speed, etc. of the pump using the variable speed mechanism.

The pressurizing device 40 may be an assembly of a plurality of the pumps. That is, the pressurizing device 40 may be configured to be capable of pressurizing the feed-side space of the second separation membrane unit 20 using each of the pumps. In this case, the pressure in the feed-side space of the second separation membrane unit 20 can be adjusted as appropriate by adjusting the number of operating pumps.

For example, in the case where a supplied gas mixture contains carbon dioxide and nitrogen, the lower the carbon dioxide content in the gas mixture is, the more likely the separation power of a separation membrane unit is to increase. There are an operation type (depressurization type) in which a pressure difference is created by depressurization of the permeation-side space of a separation membrane unit and an operation type (pressurization type) in which a pressure difference is created by pressurization of the feed-side space of a separation membrane unit. The present inventors have obtained a new finding that the lower the carbon dioxide content in a supplied gas mixture is, the more likely the difference between the magnitudes of separation power these operation types require are to be large. According to this finding, the recovery power can be reduced by adopting the depressurization type for a separation membrane unit for processing a gas mixture in which the carbon dioxide content is low (e.g., 10 vol% or less). However, the present inventors have obtained another finding that the depressurization type tends to require a large membrane area compared to the pressurization type and this tendency is more notable when the carbon dioxide content in a gas mixture is lower.

On the basis of these findings, the present inventors discussed whether it is possible to reduce the recovery power and the required membrane area by adopting the depressurization type for the first-stage separation membrane unit of a two-stage gas separation system including a combination of two separation membrane units and the pressurization type for the second-stage separation membrane unit of the two-stage gas separation system. As a result, the present inventors newly found that both reduction of the recovery power and reduction of the membrane area can be achieved by adopting, as the separation membrane of the second-stage separation membrane unit, a separation membrane that is more selective than the separation membrane of the first-stage separation membrane unit. It should be noted that the selectivity and the permeability of a separation membrane can be in a trade-off relationship. Therefore, when the above selectivity relationship is satisfied, the permeability of the separation membrane of the first-stage separation membrane unit tends to be higher than that of the separation membrane of the second-stage separation membrane unit. The gas separation system 100 according to present embodiment, which is a gas separation system including a combination of two separation membrane units (the first separation membrane unit 10 and the second separation membrane unit 20), adopts the depressurization type for the first separation membrane unit 10 in the first stage and the pressurization type for the second separation membrane unit 20 in the second stage, and the separation factor $\alpha_1$ of the first separation membrane 11 and the separation factor $\alpha_2$ of the second separation membrane 21 satisfy $\alpha_1 < \alpha_2$. The thus-configured gas separation system 100 can achieve both reduction of the recovery power and reduction of the membrane area.

A difference $(\alpha_2 - \alpha_1)$ between the separation factor $\alpha_2$ and the separation factor $\alpha_1$ may be 2 or more, 5 or more, 8 or more, or even 10 or more. The difference $(\alpha_2 - \alpha_1)$ between the separation factor $\alpha_2$ and the separation factor $\alpha_1$ may be 30 or less, 25 or less, or even 20 or less.

The difference $(\alpha_2 - \alpha_1)$ between the separation factor $\alpha_2$ and the separation factor $\alpha_1$ may satisfy $10 \leq \alpha_2 - \alpha_1 \leq 30$.

The separation factor $\alpha_4$ of the first separation membrane 11 is not limited to a particular value as long as $\alpha_1 < \alpha_2$ is satisfied. The separation factor $\alpha_1$ is, for example, 40 or less, and may be 30 or less, 25 or less, 20 or less, 15 or less, or even 10 or less. The lower limit of the separation factor $\alpha_1$ is, for example, more than 1, and may be 2 or more, 3 or more, 4 or more, or even 5 or more.

The separation factor $\alpha_4$ of the first separation membrane 11 may satisfy $10 \leq \alpha_1 \leq 30$.

The separation factor $\alpha 2$ of the second separation membrane 21 is not limited to a particular value as long as $\alpha_1 < \alpha_2$ is satisfied. The separation factor $\alpha_2$ is, for example, 5 or more, and may be 10 or more, 15 or more, 20 or more, 25 or more, 30 or more, 40 or more, 50 or more, 60 or more, 70 or more, or even 80 or more. The upper limit of the separation factor $\alpha_2$ is, for example, 200 or less, and may be 150 or less, or 100 or less.

The separation factor $\alpha_2$ of the second separation membrane 21 may satisfy $30 \leq \alpha_2 \leq 50$, or $40 \leq \alpha_2 \leq 50$.

The permeation rate $T_1$ of the second gas permeating through the first separation membrane 11 is not limited to a particular value. The permeation rate $T_1$ of the second gas is, for example, 1 GPU or more, and may be 5 GPU or more, 10 GPU or more, 50 GPU or more, or even 100 GPU or more. The upper limit of the permeation rate $T_1$ is, for example, but not particularly limited to, 1000 GPU or less. The unit "GPU" refers to $10^{-6} \cdot cm^3$ (STP)/(sec·cm$^2$·cmHg). The symbol "cm$^3$ (STP)" refers to the volume of a gas at 1 atmospheric pressure and 0°C. The permeation rate $T_1$ can be calculated from a result of the above separation operation performed using a test piece fabricated from the first separation membrane 11.

The permeation rate $T_2$ of the second gas permeating through the second separation membrane 21 is not limited to a particular value. The permeation rate $T_2$ of the second gas is, for example, 1 GPU or more, and may be 5 GPU or more, 10 GPU or more, 50 GPU or more, or even 80 GPU or more. The upper limit of the permeation rate $T_2$ is, for example, but not particularly limited to, 1000 GPU or less. The permeation rate $T_2$ can be calculated from a result of the above separation operation performed using a test piece fabricated from the second separation membrane 21.

The content of the second gas in the gas mixture may be 30 vol% or less. As described above, regarding the pressurization type, compared to the depressurization type, the lower the carbon dioxide content in a supplied gas mixture is, the more likely the required separation power is to increase, and the more likely the required membrane area is to decrease. When the content of the second gas in the gas mixture is 30 vol% or less, the required membrane area in the whole gas separation system 100 can be reduced. In the present description, the term "content" refers to a value determined under the standard conditions (0°C, 101 kPa) unless otherwise specified.

The content of the second gas in the gas mixture may be less than 30 vol%. The content of the second gas in the gas mixture may be 25 vol% or less, 20 vol% or less, 15 vol% or less, or even 10 vol% or less.

The gas separation system 100 of the present embodiment further includes a permeated gas feed passage 52. The permeated gas feed passage 52 is a passage connecting the first separation membrane unit 10 and the second separation membrane unit 20 and configured to supply the first permeated gas to the second separation membrane unit 20. The depressurizing device 30 and the pressurizing device 40 are disposed in the permeated gas feed passage 52.

The permeated gas feed passage 52 includes a first portion 52a extending from the first separation membrane unit 10 to the depressurizing device 30, a second portion 52b extending from the depressurizing device 30 to the pressurizing device 40, and a third portion 52c extending from the pressurizing device 40 to the second separation membrane unit 20.

The depressurizing device 30 can depressurize the permeation-side space of the first separation membrane unit 10 through the first portion 52a. For example, the depressurizing device 30 sucks the first permeated gas that has passed through the first portion 52a and discharges the first permeated gas into the second portion 52b. The depressurizing device 30 is configured, for example, not to discharge the first permeated gas that has passed through the first portion 52a out of the gas separation system 100. The depressurizing device 30 is connected, for example, only to the first portion 52a and the second portion 52b. When the depressurizing device 30 is an assembly of a plurality of the pumps, the first portion 52a of the permeated gas feed passage 52 may branch off and be connected to inlets of the pumps. Likewise, the second portion 52b of the permeated gas feed passage 52 may branch off and be connected to outlets of the pumps.

The pressurizing device 40 can pressurize the feed-side space of the second separation membrane unit 20 through the third portion 52c. For example, the pressurizing device 40 pumps the first permeated gas that has passed through the second portion 52b and discharges the first permeated gas into the third portion 52c. The pressurizing device 40 is configured, for example, not to discharge the gas that has passed through the second portion 52b out of the gas separation system 100. The pressurizing device 40 is connected, for example, only to the second portion 52b and the third portion 52c. When the pressurizing device 40 is an assembly of a plurality of the pumps, the second portion 52b of the permeated gas feed passage 52 may branch off and be connected to inlets of the pumps. Likewise, the third portion 52c of the permeated gas feed passage 52 may branch off and be connected to outlets of the pumps.

In the third portion 52c of the permeated gas feed passage 52, a heat exchanger (not shown) may be disposed between the pressurizing device 40 and the second separation membrane unit 20. The heat exchanger cools the first permeated gas pumped by the pressurizing device 40, for example. The heat exchanger is, for example, a gas-liquid heat exchanger that causes heat exchange between a cooling medium, such as an antifreeze, and the first permeated gas, and is typically a fin tube heat exchanger.

When the gas mixture to be processed in the first separation membrane unit 10 contains moisture ($H_2O$), a drain flow passage (not shown) may be connected to the third portion 52c of the permeated gas feed passage 52. When the gas mixture contains moisture, the first permeated gas, which still contains moisture, is supplied to the pressurizing device 40 and is then condensed by compression using the pressurizing device 40. The drain flow passage discharges the condensed moisture to the outside.

The gas separation system 100 of the present embodiment further includes a gas mixture feed passage 51. The gas mixture feed passage 51 is a passage connected to an inlet 13a of the first separation membrane unit 10 and configured to supply the gas mixture to the first separation membrane unit 10 from, for example, a container (not shown) storing the gas mixture. The gas mixture feed passage 51 may be connected directly to a source of the gas mixture, or may be configured to supply continuously the gas mixture to the first separation membrane unit 10 from the source.

The gas separation system 100 further includes a first discharge passage 53. The first discharge passage 53 is a passage connected to an outlet 13b of the first separation membrane unit 10 and configured to discharge the first non-permeated gas from the first separation membrane unit 10. The first discharge passage 53 is provided with an opening (not shown) for discharging the first non-permeated gas from the first discharge passage 53. As shown in FIG. 1, the gas separation system 100 may further include a recovery portion 61 for recovering the first non-permeated gas. The first discharge passage 53 may be connected to the recovery portion 61. The recovery portion 61 is, for example, a container that stores the first non-permeated gas.

The gas separation system 100 of the present embodiment further includes a second discharge passage 54 and a recovery portion 62. The second discharge passage 54 is a passage connected to an outlet 24a of the second separation membrane unit 20 and an inlet of the recovery portion 62 and configured to deliver the second permeated gas from the second separation membrane unit 20 to the recovery portion 62. The recovery portion 62 can recover the second permeated gas delivered from the second separation membrane unit 20. The recovery portion 62 is, for example, a container that stores the second permeated gas.

The gas separation system 100 of the present embodiment further includes a third discharge passage 55. The third discharge passage 55 is a passage connected to an outlet 23b of the second separation membrane unit 20 and configured to discharge the second non-permeated gas from the second separation membrane unit 20. As shown in FIG. 1, the third discharge passage 55 may join the gas mixture feed passage 51 at a joining point 51a. The third discharge passage 55's joining the gas mixture feed passage 51, for example, makes it possible to reuse the second non-permeated gas containing the second gas which the second separation membrane unit 20 failed to separate completely.

The third discharge passage 55 does not necessarily join the gas mixture feed passage 51. The discharge passage 55 may be connected directly to a recovery portion (not shown) for recovering the second non-permeated gas.

Each passage of the gas separation system 100 is formed of, for example, a metal or resin pipe unless otherwise noted.

The gas separation system 100 may further include a controller (not shown) that controls each member of the gas separation system 100. The controller is, for example, a digital signal processor (DSP) including an A/D conversion circuit, an input/output circuit, an arithmetic circuit, a storage device, etc. A program for proper operation of the gas separation system 100 is stored in the controller. Specifically, the controller can control, for example, behavior of each of the depressurizing device 30 and the pressurizing device 40. The controller may receive information from a gas sensor and determine operation conditions for each of the depressurizing device 30 and the pressurizing device 40 on the basis of the information.

In one example, the controller controls the depressurizing device 30 so that the permeation-side space of the first separation membrane unit 10 is depressurized when the gas mixture is supplied to the first separation membrane unit 10 from the gas mixture feed passage 51. Specifically, the controller controls the depressurizing device 30 so that the permeation-side space of the first separation membrane unit 10 is kept pressurized while the gas mixture is supplied to the first separation membrane unit 10. Likewise, the controller controls the pressurizing device 40 so that the feed-side space of the second separation membrane unit 20 is pressurized when the first permeated gas is supplied from the permeated gas feed passage 52 to the second separation membrane unit 20. Specifically, the controller controls the pressurizing device 40 so that the feed-side space of the second separation membrane unit 20 is kept pressurized while the first permeated gas is supplied to the second separation membrane unit 20. The gas separation system 100 does not necessarily include the controller. For the gas separation system 100, behavior of each of the depressurizing device 30 and the pressurizing device 40 may be controlled by an operator switching on or off each of the depressurizing device 30 and the pressurizing device 40.

The gas separation system 100 of the present embodiment is, for example, a continuous-type system. In the present description, the continuous-type system means a system that can process the gas mixture continuously without closing, by using an on-off valve or the like, the passages included in the gas separation system 100. In other words, the gas separation system 100 can process the gas mixture in the first separation membrane unit 10 and can process the first permeated gas obtained in the first separation membrane unit 10 immediately in the second separation membrane unit 20 without collecting the first permeated gas into, for example, a recovery portion. As just described above, the gas separation system 100 of the present embodiment can be operated continuously. The gas separation system 100 that functions as a continuous-type system is suitable for applications in which a gas mixture is supplied continuously, in particular, for processing of an emission gas from factories, power plants, etc.

For the gas separation system 100, for example, at least one of (I) and (II) is established: (I) the gas mixture is separated into the first permeated gas and the first non-permeated gas while the permeation-side space of the first separation membrane unit 10 is depressurized using the depressurizing device 30; and (II) the first permeated gas is separated into the second permeated gas and the second non-permeated gas while the feed-side space of the second separation membrane unit 20 is pressurized using the pressurizing device 40. For the gas separation system 100, both of the above requirements (I) and (II) are desirably established.

[First Separation Membrane Unit]

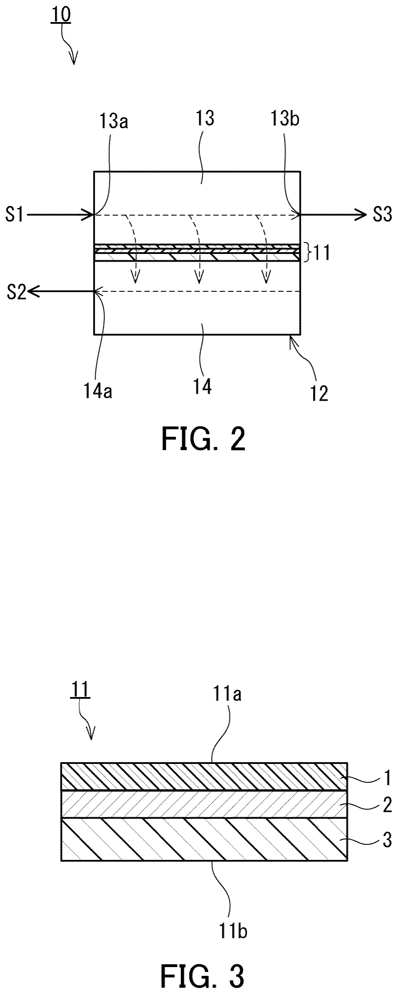

FIG. 2 is a schematic cross-sectional view showing an example of the first separation membrane unit 10. As shown in FIG. 2, the first separation membrane unit 10 includes the first separation membrane 11 and a container 12. The container 12 has a first chamber 13 and a second chamber 14. A space in the first chamber 13 corresponds to the feed-side space and a space in the second chamber 14 corresponds to the permeation-side space. The first separation membrane 11 is disposed in the container 12. In the container 12, the first separation membrane 11 separates the first chamber 13 and the second chamber 14 from each other. The first separation membrane 11 extends from one of a pair of wall surfaces of the container 12 to the other.

The first chamber 13 has the inlet 13a and the outlet 13b. The second chamber 14 has an outlet 14a. The inlet 13a of the first chamber 13 is an opening for supplying a gas mixture S1 to the first separation membrane unit 10. The outlet 14a of the second chamber 14 is an opening for discharging, from the first separation membrane unit 10, a first permeated gas S2 obtained by allowing the gas mixture S1 to permeate through the first separation membrane 11. The outlet 13b of the first chamber 13 is an opening for discharging, from the first separation membrane unit 10, the gas mixture S1 (a first non-permeated gas S3) not having permeated through the first separation membrane 11. The inlet 13a, the outlet 13b, and the outlet 14a are provided, for example, in wall surfaces of the container 12.

(First Separation Membrane)

In the gas separation system 100 of the present embodiment, a membrane area $M_1$ of the first separation membrane 11 is preferably larger than a membrane area $M_2$ of the second separation membrane 21. A ratio $M_1/M_2$ of the membrane area $M_1$ of the first separation membrane 11 to the membrane area $M_2$ of the second separation membrane 21 may be, for example, 1.0 or more, 1.5 or more, or even 2.0 or more. The upper limit of the ratio $M_1/M_2$ may be, for example, 150 or less, 100 or less, 50 or less, 20 or less, or even 15 or less.

As described above, the first separation membrane 11 is preferentially permeable to the second gas contained in the gas mixture S1. Hereinafter, the first separation membrane 11 in the case where the second gas is carbon dioxide, i.e., the first separation membrane 11 preferentially permeable to carbon dioxide, will be described. In the present description, a separation membrane preferentially permeable to carbon dioxide may be referred to as a "carbon dioxide permeable membrane."

FIG. 3 is a cross-sectional view schematically showing an example of the first separation membrane 11. As shown in FIG. 3, the first separation membrane 11 as a carbon dioxide permeable membrane includes, for example, a separation functional layer 1. The first separation membrane 11 may further include a porous support member 3 supporting the separation functional layer 1 and an intermediate layer 2 disposed between the separation functional layer 1 and the porous support member 3. The intermediate layer 2 is, for example, in direct contact with each of the separation functional layer 1 and the porous support member 3.

(Separation Functional Layer)

The separation functional layer 1 is a layer preferentially permeable to carbon dioxide contained in the gas mixture S1. In a preferred embodiment, the separation functional layer 1 includes a resin. Examples of the resin included in the separation functional layer 1 include a polyether block amide resin, a polyamide resin, a polyether resin, a polyimide resin, a cellulose acetate resin, a silicone resin, and a fluorine resin. The separation functional layer 1 preferably includes a polyether block amide resin. In this embodiment, it is preferable that the separation functional layer 1 substantially consist of a resin. In the present description, the phrase "substantially consisting of" a material means that other components that would alter essential characteristics of the material are excluded and that the material accounts for, for example, 95 wt% or more, or even 99 wt% or more.

In another preferred embodiment, the separation functional layer 1 includes an ionic liquid. The ionic liquid is a salt (an ionic compound) that is liquid at 25°C. The separation functional layer 1 includes, for example, a double-network gel including an ionic liquid. The double-network gel is a gel including two types of network structures independent from each other. The double-network gel includes, for example, a first network structure composed mainly of an organic material, a second network structure composed mainly of an inorganic material, and an ionic liquid. The second network structure may be composed mainly of an organic material different from the organic material of the first network structure. In the present description, the phrase "composed mainly of" a material means that the material accounts for 50 wt% or more or even 70 wt% or more.

The organic material constituting the first network structure includes, for example, a polymer such as polyacrylamide (particularly, polydialkylacrylamide such as polydimethylacrylamide). The polymer included in the organic material may have a structural unit derived from an acrylamide derivative and may further include a cross-linked structure. The polymer including a cross-linked structure can be produced by a known method. For example, first, a prepolymer having a structural unit having an N-hydroxysuccinimide ester group is prepared. The structural unit having an N-hydroxysuccinimide ester group derives from N-acryloxysuccinimide, for example. Next, the prepolymer and an amine crosslinking agent are allowed to react with each other, and thereby a polymer including a cross-linked structure is obtained. The amine crosslinking agent is a compound having two or more primary amino groups, and is, for example, ethylene glycol bis(3-aminopropyl) ether.

The second network structure may include a network of a plurality of particles. The network of the particles are formed, for example, by hydrogen-bonding the particles to each other. The particles included in the second network structure may be particles mentioned as examples of the later-described nanoparticles. In an example, the particles included in the second network structure are silica particles.

In the present embodiment, specific examples of the ionic liquid include an ionic liquid having: imidazolium, pyridinium, ammonium, or phosphonium; and a substituent having 1 or more carbon atoms.

In an ionic liquid having imidazolium and a substituent having 1 or more carbon atoms, examples of the substituent having 1 or more carbon atoms include an alkyl group having 1 to 20 carbon atoms, a cycloalkyl group having 3 to 14 carbon atoms, and an aryl group having 6 to 20 carbon atoms. These may be each further substituted by a hydroxy group, a cyano group, an amino group, a monovalent ether group, or the like (for example, a hydroxyalkyl group having 1 to 20 carbon atoms).

Examples of the alkyl group having 1 to 20 carbon atoms include a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, an n-eicosadecyl group, an i-propyl group, a sec-butyl group, an i-butyl group, a 1-methylbutyl group, a 1-ethylpropyl group, a 2-methylbutyl group, an i-pentyl group, a neopentyl group, a 1,2-dimethylpropyl group, a 1,1-dimethylpropyl group, a t-pentyl group, a 2-ethylhexyl group, and a 1,5-dimethylhexyl group. These may be each further substituted by a hydroxy group, a cyano group, an amino group, a monovalent ether group, or the like.

The above alkyl group may be substituted by a cycloalkyl group. The number of carbon atoms in the alkyl group substituted by the cycloalkyl group is, for example, 1 to 20. Examples of the alkyl group substituted by the cycloalkyl group include a cyclopropyl methyl group, a cyclobutyl methyl group, a cyclohexyl methyl group, and a cyclohexyl propyl group. These may be each further substituted by a hydroxy group, a cyano group, an amino group, a monovalent ether group, or the like.

Examples of the cycloalkyl group having 3 to 14 carbon atoms include a cyclopropyl group, a cyclobutyl group, a cyclopentyl group, a cyclohexyl group, a cycloheptyl group, a cyclooctyl group, a cyclododecyl group, a norbornyl group, a bornyl group, and an adamantyl group. These may be each further substituted by a hydroxy group, a cyano group, an amino group, a monovalent ether group, or the like.

Examples of the aryl group having 6 to 20 carbon atoms include a phenyl group, a toluyl group, a xylyl group, a mesityl group, an anisyl group, a naphthyl group, and a benzyl group. These may be each further substituted by a hydroxy group, a cyano group, an amino group, a monovalent ether group, or the like.

The compound having imidazolium and the substituent having 1 or more carbon atoms may further have a substituent such as an alkyl group, or may form a salt with a counter anion. Examples of the counter anion include alkyl sulfate, tosylate, methanesulfonate, acetate, bis(fluorosulfonyl)imide, bis(trifluoromethanesulfonyl)imide, thiocyanate, dicyanamide, tricyanomethanide, tetracyanoborate, hexafluorophosphate, tetrafluoroborate, and halide. From the viewpoint of gas separation performance, bis(fluorosulfonyl)imide, bis(trifluoromethanesulfonyl)imide, dicyanamide, tricyanomethanide, and tetracyanoborate are preferred.

Specific examples of the ionic liquid having imidazolium and the substituent having 1 or more carbon atoms include 1-ethyl-3-methylimidazolium bis(fluorosulfonyl)imide, 1-ethyl-3-methylimidazolium dicyanamide, 1-butyl-3-methylimidazolium bromide, 1-butyl-3-methylimidazolium chloride, 1-butyl-3-methylimidazolium tetrafluoroborate, 1-butyl-3-methylimidazolium hexafluorophosphate, 1-butyl-3-methylimidazolium trifluoromethanesulfonate, 1-butyl-3-methylimidazolium tetrachloroferrate, 1-butyl-3-methylimidazolium iodide, 1-butyl-2,3-dimethylimidazolium chloride, 1-butyl-2,3-dimethylimidazolium hexafluorophosphate, 1-butyl-2,3-dimethylimidazolium tetrafluoroborate, 1-butyl-3-methylimidazolium bis(trifluoromethanesulfonyl)imide, 1-butyl-2,3-dimethylimidazolium bis(trifluoromethanesulfonyl) imide, 1-butyl-3-methylimidazolium trifluoro(trifluoromethyl)borate, 1-butyl-3-methylimidazolium tribromide, 1,3-dimesitylimidazolium chloride, 1,3-bis(2,6-diisopropylphenyl)imidazolium chloride, 1,3-diisopropylimidazolium tetrafluoroborate, 1,3-di-tert-butylimidazolium tetrafluoroborate, 1,3-dicyclohexylimidazolium tetrafluoroborate, 1,3-dicyclohexylimidazolium chloride, 1,2-dimethyl-3-propylimidazolium iodide, 1-hexyl-3-methylimidazolium chloride, 1-hexyl-3-methylimidazolium hexafluorophosphate, 1-hexyl-3-methylimidazolium tetrafluoroborate, 1-hexyl-3-methylimidazolium bromide, 1-methyl-3-propylimidazolium iodide, 1-methyl-3-n-octylimidazolium bromide, 1-methyl-3-n-octylimidazolium chloride, 1-methyl-3-n-octylimidazolium hexafluorophosphate, 1-methyl-3-[6-(methylsulfinyl)hexyl]imidazolium p-toluenesulfonate, 1-ethyl-3-methylimidazolium tricyanomethanide, 1-ethyl-3-methylimidazolium tetracyanoborate, and 1-(2-hydroxyethyl)-3-methylimidazolium bis(trifluoromethanesulfonyl)imide.

Among these, from the viewpoint of gas separation performance, 1-ethyl-3-methylimidazolium bis(fluorosulfonyl)imide ([EMI][FSI]), 1-ethyl-3-methylimidazolium dicyanamide ([EMI][DCA]), 1-ethyl-3-methylimidazolium tricyanomethanide ([EMI][TCM]), 1-ethyl-3-methylimidazolium tetracyanoborate ([EMI][TCB]), 1-butyl-3-methylimidazolium bis(trifluoromethanesulfonyl)imide ([$C_4$mim][$TF_2N$]), and 1-(2-hydroxyethyl)-3-methylimidazolium bis(trifluoromethanesulfonyl)imide ([$C_2$OHim][$TF_2N$]) are particularly preferred.

The method for producing the double-network gel is not limited to a particular method, and the method disclosed in E. Kamio et al., Adv. Mater, 29, 1704118 (2017) can be used, for example.

An ionic liquid content in the double-network gel is, for example, 50 wt% or more, preferably 60 wt% or more, more preferably 70 wt% or more, and still more preferably 80 wt% or more. The higher the ionic liquid content is, the more preferentially the separation functional layer 1 is permeable to an acid gas contained in the gas mixture. The upper limit of the ionic liquid content is, for example, but not particularly limited to, 95 wt%.

A content of the first network structure in the double-network gel is, for example, 1 wt% or more, preferably 5 wt% or more, and more preferably 10 wt% or more, the first network structure being composed mainly of an organic material. The upper limit of the content of the first network structure is, for example, 15 wt%. A content of the second network structure in the double-network gel is, for example, 1 wt% or more from the viewpoint of improving the strength of the double-network gel, the second network structure being composed mainly of an inorganic material. The upper limit of the content of the second network structure is, for example, 5 wt%. A ratio of a sum of weights of the first and second network structures to a weight of the double-network gel is, for example, 2 wt% or more, preferably 5 wt% or more, and more preferably 10 wt% or more. This ratio is preferably 20 wt% or less. In this embodiment, it is preferable that the separation functional layer 1 substantially consist of the double-network gel.

A thickness of the separation functional layer 1 is, for example, 50 $\mu$m or less, preferably 25 $\mu$m or less, and more preferably 15 $\mu$m or less. In some cases, the thickness of the separation functional layer 1 may be 10 $\mu$m or less, 5.0 $\mu$m or less, or 2.0 $\mu$m or less. The thickness of the separation functional layer 1 may be 0.05 $\mu$m or more, or 0.1 $\mu$m or more.

(Intermediate Layer)

The intermediate layer 2 includes, for example, a resin, and may further include nanoparticles dispersed in the resin (matrix). The nanoparticles may be spaced from each other or partially aggregate in the matrix. A material of the matrix is not limited to a particular one, and examples thereof include: a silicone resin such as polydimethylsiloxane; a fluorine resin such as polytetrafluoroethylene; an epoxy resin such as polyethylene oxide; a polyimide resin; a polysulfone resin; a polyacetylene resin such as polytrimethylsilylpropyne or polydiphenylacetylene; and a polyolefin resin such as polymethylpentene. The matrix preferably includes a silicone resin.

The nanoparticles may include an inorganic material or an organic material. The inorganic material included in the nanoparticles is, for example, silica, titania, or alumina. The nanoparticles preferably include silica.

A thickness of the intermediate layer 2 is not limited to a particular value, and is, for example, less than 50 $\mu$m, preferably 40 $\mu$m or less, and more preferably 30 $\mu$m or less. The lower limit of the thickness of the intermediate layer 2 is not limited to a particular value, and is, for example, 0.1 $\mu$m. The intermediate layer 2 is, for example, a layer having a thickness of less than 50 $\mu$m.

(Porous Support)

The porous support member 3 supports the separation functional layer 1 via the intermediate layer 2. Examples of the porous support 3 include: nonwoven fabric; porous polytetrafluoroethylene; aromatic polyamide fiber; a porous metal; a sintered metal; a porous ceramic; a porous polyester; porous nylon; activated carbon fiber; latex; silicone; silicone rubber; a permeable (porous) polymer including at least one selected from the group consisting of polyvinyl fluoride, polyvinylidene fluoride, polyurethane, polypropylene, polyethylene, polystyrene, polycarbonate, polysulfone, polyether ether ketone, polyacrylonitrile, polyimide, and polyphenylene oxide; a metallic foam having an open cell or a closed cell; a polymer foam having an open cell or a closed cell; silica; porous glass; and mesh screen. The porous support member 3 may be a combination of two or more of these materials.

The porous support member 3 has, for example, an average pore diameter of 0.01 to 0.4 $\mu$m. A thickness of the porous support member 3 is not limited to a particular value, and is, for example, 10 $\mu$m or more, preferably 20 $\mu$m or more, and more preferably 50 $\mu$m or more. The thickness of the porous support member 3 is, for example, 300 $\mu$m or less, preferably 200 $\mu$m or less, and more preferably 150 $\mu$m or less.

The first separation membrane 11 is typically a flat membrane. The first separation membrane 11 may have a shape other than a flat membrane, and may be, for example, a hollow fiber membrane.

(Method for Producing First Separation Membrane)

The first separation membrane 11 can be produced, for example, by the following method. First, a coating liquid containing the material(s) of the intermediate layer 2 is prepared. Next, the coating liquid containing the material(s) of the intermediate layer 2 is applied onto the porous support member 3 to form a coating. The method for applying the coating liquid is not limited to a particular one, and a wire bar, etc. can be used, for example. The thickness of the intermediate layer 2 to be formed can be adjusted by adjusting a wire diameter of the wire bar and a concentration of the material(s) of the intermediate layer 2 in the coating liquid. The coating may be formed by immersing the porous support member 3 in the coating liquid. Next, the coating is dried to form the intermediate layer 2. The coating can be dried, for example, under heating conditions. The heating temperature of the coating is, for example, 50°C or higher. The heating time of the coating is, for example, 1 minute or longer, and may be 5 minutes or longer.

An easy-adhesion treatment can be applied to a surface of the intermediate layer 2 as necessary. As the easy-adhesion treatment, a surface treatment such as application of an undercoat agent, a corona discharge treatment, or a plasma treatment may be applied.

Next, a coating liquid containing the material(s) of the separation functional layer 1 is prepared. The coating liquid containing the material(s) of the separation functional layer 1 is applied onto the intermediate layer 2 to give a coating. The coating is dried to form the separation functional layer 1. The method for applying the coating liquid and the drying conditions can be the same as the method and the conditions described above for the intermediate layer 2. The application of the coating liquid containing the material(s) of the separation functional layer 1 may be performed by spin coating. Thus, the first separation membrane 11 can be obtained.

The method for producing the first separation membrane 11 is not limited to the above method. For example, the first separation membrane 11 can also be produced by the following method. For example, the coating liquid containing the material(s) of the separation functional layer 1 is applied onto a transfer film to give a coating. The coating is dried to form the separation functional layer 1. Next, the coating liquid containing the material(s) of the intermediate layer 2 is applied onto the separation functional layer 1 and dried to form the intermediate layer 2. A laminate of the intermediate layer 2 and the separation functional layer 1 is transferred to the porous support member 3. Thus, the first separation membrane 11 can be obtained.

[Second Separation Membrane Unit]

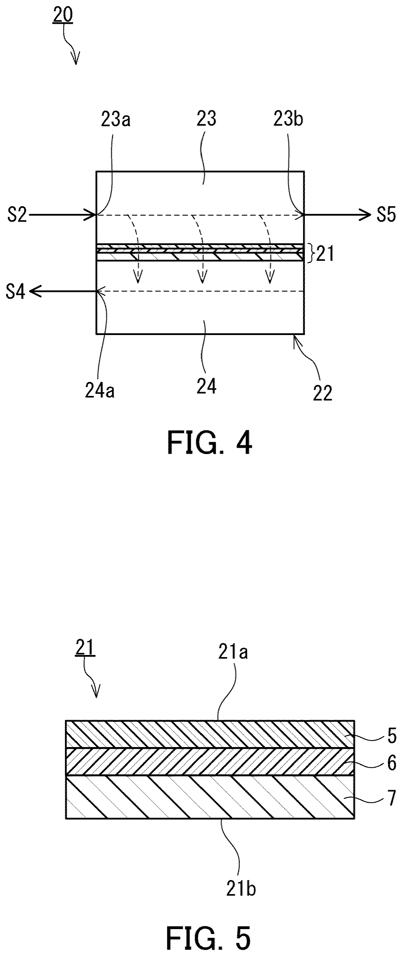

FIG. 4 is a schematic cross-sectional view showing an example of the second separation membrane unit 20. As shown in FIG. 4, the second separation membrane unit 20 includes the second separation membrane 21 and a container 22. The container 22 includes a third chamber 23 and a fourth chamber 24. A space in the third chamber 23 corresponds to the feed-side space, and a space in the fourth chamber 24 corresponds to the permeation-side space. The second separation membrane 21 is disposed in the container 22. In the container 22, the second separation membrane 21 separates the third chamber 23 and the fourth chamber 24 from each other. The second separation membrane 21 extends from one of a pair of wall surfaces of the container 22 to the other.

The third chamber 23 has an inlet 23a and the outlet 23b. The fourth chamber 24 has the outlet 24a. The inlet 23a of the third chamber 23 is an opening for providing the first permeated gas S2 to the second separation membrane unit 20. The outlet 24a of the fourth chamber 24 is an opening for discharging, from the second separation membrane unit 20, a second permeated gas S4 obtained by allowing the first permeated gas S2 to permeate through the second separation membrane 21. The outlet 23b of the third chamber 23 is an opening for discharging, from the second separation membrane unit 20, the first permeated gas S2 (a second non-permeated gas S5) not having permeated through the second separation membrane 21. The inlet 23a, the outlet 23b, and the outlet 24a are provided, for example, in wall surfaces of the container 22.

(Second Separation Membrane)

As described above, the second separation membrane 21 is a carbon dioxide permeable membrane preferentially permeable to the second gas contained in the first permeated gas S2.

FIG. 5 is a cross-sectional view schematically showing an example of the second separation membrane 21. As shown in FIG. 5, the second separation membrane 21 as a carbon dioxide permeable membrane includes, for example, a separation functional layer 5. The second separation membrane 21 may further include a porous support member 7 supporting the separation functional layer 5 and an intermediate layer 6 disposed between the separation functional layer 5 and the porous support member 7. The intermediate layer 6 is, for example, in direct contact with each of the separation functional layer 5 and the porous support member 7. The second separation membrane 21 has a principal surface 21a on the separation functional layer 5 side and a principal surface 21b on the porous support member 7 side.

Description of the separation functional layer 5 is omitted because the separation functional layer 5 has the same structure and the same effect as the separation functional layer 2 of the first separation membrane 11. Description of the intermediate layer 6 is omitted because the intermediate layer 6 has the same structure and the same effect as the intermediate layer 2 of the first separation membrane 11. Description of the porous support 7 is omitted because the porous support 7 has the same structure and the same effect as the porous support 3 of the first separation membrane 11.

The second separation membrane 21 may be the same as the first separation membrane 11 except for the membrane area, or may be different from the first separation membrane 11. In one example, at least one selected from the group consisting of the first separation membrane 11 and the second separation membrane 21 may include a polyether block amide resin or an ionic liquid as the material of the separation functional layer, and both the first separation membrane 11 and the second separation membrane 21 preferably include a polyether block amide resin or an ionic liquid as the material of the separation functional layer.

The second separation membrane 21 is typically a flat membrane. The second separation membrane 21 may have a shape other than a flat membrane shape, and may be, for example, a hollow fiber membrane.

The second separation membrane 21 can be produced by the same method as the method for producing the first separation membrane 11.

The first separation membrane unit 10 and the second separation membrane unit 20 included in the gas separation system 100 are suitable for a flow-type (continuous-type) membrane separation method. However, these separation membrane units may be used for a batch-type membrane separation method.

[Modification of First Separation Membrane Unit]

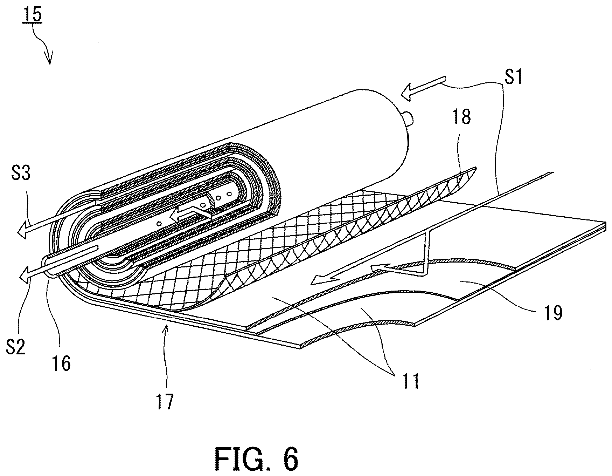

In the gas separation system 100, the first separation membrane unit 10 is not limited to the embodiment shown in FIG. 2, and may be, for example, a spiral membrane element, a hollow fiber membrane element, or the like. FIG. 6 is a perspective view schematically showing another example of the first separation membrane unit 10. FIG. 6 shows a spiral membrane element. A first separation membrane unit 15 of FIG. 6 includes a central tube 16 and a layered body 17. The layered body 17 includes the first separation membrane 11.

The central tube 16 has a cylindrical shape. The central tube 16 has a surface with a plurality of openings to allow the first permeated gas 80 to flow into the central tube 16. Examples of a material of the central tube 16 include: resins, such as an acrylonitrile-butadiene-styrene copolymer resin (ABS resin), a polyphenylene ether resin (PPE resin), and a polysulfone resin (PSF resin); and metals, such as stainless steel and titanium. The central tube 16 has an inner diameter of, for example, 20 to 100 mm.

The layered body 17 further includes a feed-side flow passage material 18 and a permeation-side flow passage material 19 in addition to the first separation membrane 11. The layered body 17 is wound around the central tube 16. The first separation membrane unit 15 may further include an exterior material (not shown).

As the feed-side flow passage material 18 and the permeation-side flow passage material 19, for example, resin net, woven fabric, or knitted fabric formed of polyethylene, polypropylene, polyethylene terephthalate (PET), polyphenylene sulfide (PPS), or an ethylene-chlorotrifluoroethylene copolymer (ECTFE) can be used.

Membrane separation using the first separation membrane unit 15 is performed, for example, by the following method. First, the gas mixture S1 is supplied to one end of the wound layered body 17. Then, the first permeated gas S2 having permeated through the first separation membrane 11 of the layered body 17 moves into the central tube 16. The first permeated gas S2 is discharged outside through the central tube 16. The gas mixture S1 (the first non-permeated gas S3) processed in the first separation membrane unit 15 is discharged outside from the other end of the wound layered body 17.

In the gas separation system 100, the second separation membrane unit 20 is not limited to the embodiment shown in FIG. 4, and may be, for example, a spiral membrane element, a hollow fiber membrane element, or the like. In one example, the second separation membrane unit 20 may be a spiral membrane element having the same configuration as that of the first separation membrane unit 15.

[Method for Separating Gas Mixture]

Next, a gas mixture separation method according to one embodiment of the present invention will be described.

The gas mixture separation method includes: a first separation step of separating the gas mixture S1 into the first permeated gas S2 and the first non-permeated gas S3 by supplying the gas mixture S1 to the first separation membrane unit 10 and depressurizing the permeation-side space of the first separation membrane unit 10, the first separation membrane unit 10 accommodating the first separation membrane 11; and a second separation step of separating the first permeated gas S2 into the second permeated gas S4 and the second non-permeated gas S5 by supplying the first permeated gas S2 to the second separation membrane unit 20 and pressurizing the feed-side space of the second separation membrane unit 20, the second separation membrane unit 20 accommodating the second separation membrane 21. In the gas mixture separation method of the present embodiment, the separation factor $\alpha_1$ of the first separation membrane 11 for the second gas with respect to the first gas and the separation factor $\alpha_2$ of the second separation membrane 21 for the second gas with respect to the first gas satisfy $\alpha_1 < \alpha_2$, the separation factors $\alpha_1$ and $\alpha_2$ being determined by the above test.

The gas mixture separation method of the present embodiment, which is a separation method including a combination of two separation steps (the first separation step and the second separation step), adopts the depressurization type for the first separation step in the first stage and the pressurization type for the second separation step in the second stage, and the separation factor $\alpha1$ of the first separation membrane 11 and the separation factor $a2$ of the second separation membrane 21 satisfy $\alpha_1 < \alpha_2$. The thus-configured gas mixture separation method can achieve both reduction of the recovery power and reduction of the membrane area.

(First Separation Step)

The first separation step is performed, for example, as follows. First, the gas mixture S1 is supplied to the first chamber 13 (the feed-side space) of the first separation membrane unit 10 through the gas mixture feed passage 51. Without being pressurized, for example, the gas mixture S1 is supplied at an atmospheric pressure (e.g., 101.33 kPa) in a measurement environment to the first chamber 13.

Next, the second chamber 14 (permeation-side space) is depressurized while the gas mixture S1 is supplied to the first chamber 13 of the first separation membrane unit 10. Specifically, the second chamber 14 is depressurized using the depressurizing device 30 through the outlet 14a. The pressure in the permeation-side space is, for example, 70 kPa or less, preferably 50 kPa or less, more preferably 30 kPa or less, even more preferably 10 kPa or less, particularly preferably 5 kPa or less. The pressure in the permeation-side space may be 1 kPa or more, 2 kPa or more, 3 kPa or more, or 5 kPa or more, taking into account the energy (power) required to operate the depressurizing device 30.

By depressurizing the second chamber 14, a pressure difference is created or increased between the feed-side space and the permeation-side space. Consequently, the gas mixture S1 is separated by the first separation membrane 11 and the first permeated gas S2 is supplied to the second chamber 14. The second chamber 14 may be kept depressurized using the depressurizing device 30 during the separation of the gas mixture S1. The pressure difference between the feed-side space and the permeation-side space of the first separation membrane unit 10 is adjusted, for example, to 500 kPa or less, preferably 400 kPa or less, more preferably 300 kPa or less, even more preferably 200 kPa or less, particularly preferably 100 kPa or less in terms of reducing the energy consumed by the gas separation system 100. The lower limit of the pressure difference between the feed-side space and the permeation-side space of the first separation membrane unit 10 is, for example, but not particularly limited to, 10 kPa.

The first permeated gas S2 supplied to the second chamber 14 passes through the first portion 52a of the permeated gas feed passage 52 and is sucked by the depressurizing device 30. The depressurizing device 30 discharges the sucked first permeated gas S2 into the second portion 52b of the permeated gas feed passage 52. Since the first permeated gas S2 is supplied to the second portion 52b, the pressure in the second portion 52b is commonly maintained roughly equal to an atmospheric pressure in a measurement environment. The first permeated gas S2 is supplied to the pressurizing device 40 through the second portion 52b.

As described above, the first separation membrane 11 of the first separation membrane unit 10 is preferentially permeable to the second gas contained in the gas mixture S1. Therefore, the first permeated gas S2 obtained by the first separation step has a higher second gas content than that in the gas mixture S1. The content of the second gas (e.g., carbon dioxide) in the first permeated gas S2 obtained by the first separation step is, for example, but not particularly limited to, 40 vol% to 70 vol%. A ratio of the content (vol%) of the second gas in the first permeated gas S2 to the content (vol%) of the second gas in the gas mixture S1 is, for example, but not particularly limited to, 2 to 6.

Meanwhile, a concentration of the first gas in the gas mixture S1 gradually increases from the inlet 13a of the first chamber 13 toward the outlet 13b thereof. A content of the first gas (e.g., nitrogen) in the gas mixture S1 (the first non-permeated gas S3) processed in the first chamber 13 is, for example, 95 vol% to 99 vol%. The first non-permeated gas S3 is discharged out of the first separation membrane unit 10 through the outlet 13b. The first non-permeated gas S3 is discharged, for example, through the first discharge passage 53.

(Second Separation Step)

The second separation step is performed, for example, as follows. First, the first permeated gas S2 is supplied to the third chamber 23 (feed-side space) of the second separation membrane unit 20 through the second portion 52b and the third portion 52c of the permeated gas feed passage 52.

Next, the third chamber 23 (feed-side space) is pressurized while the first permeated gas S2 is supplied to the third chamber 23 of the second separation membrane unit 20. Specifically, the third chamber 23 is pressurized though the inlet 23a using the pressurizing device 40 disposed in the third portion 52c. The pressure in the feed-side space is, for example, 101 kPa or more, preferably 150 kPa or more, more preferably 200 kPa or more, even more preferably 300 kPa or more, particularly preferably 400 kPa or more. The upper limit of the pressure in the feed-side space may be 1500 kPa, 1300 kPa, 1100 kPa, 1000 kPa, or 900 kPa.

By pressurizing the third chamber 23, a pressure difference is created or increased between the feed-side space and the permeation-side space. Consequently, the first permeated gas S2 is separated using the second separation membrane 21, and the second permeated gas S4 is supplied to the fourth chamber 24. The third chamber 23 may be kept pressurized using the pressurizing device 40 during the separation of the first permeated gas S2. The pressure difference between the feed-side space and the permeation-side space of the second separation membrane unit 20 is adjusted to, for example, 1000 kPa or less, preferably 800 kPa or less, more preferably 600 kPa or less, even more preferably 500 kPa or less, particularly preferably 400 kPa or less, in terms of reducing the energy consumed by the gas separation system 100. The lower limit of the pressure difference between the feed-side space and the permeation-side space of the second separation membrane unit 20 is, for example, but not particularly limited to, 100 kPa.

The second permeated gas S4 supplied to the fourth chamber 24 is, for example, delivered to the recovery portion 62 through the second discharge passage 54.

As described above, the second separation membrane 21 of the second separation membrane unit 20 is preferentially permeable to the second gas contained in the first permeated gas S2. Therefore, the second permeated gas S4 obtained by the second separation step has a higher second gas content than that in the first permeated gas S2. A content of the second gas (e.g., carbon dioxide) in the second permeated gas S4 obtained by the second separation step is, for example, but not particularly limited to, 95 vol%. A ratio of the content (vol%) of the second gas in the second permeated gas S4 to the content (vol%) of the second gas in the first permeated gas S2 is, for example, but not particularly limited to, 1.3 to 2.5.

Meanwhile, a concentration of the first gas in the first permeated gas S2 gradually increases from the inlet 23a of the third chamber 23 toward the outlet 23b thereof. A content of the first gas (e.g., nitrogen) in the first permeated gas S2 (the second non-permeated gas S5) processed in the third chamber 23 is, for example, but not particularly limited to, 70 vol% to 97 vol%. The second non-permeated gas S5 is discharged out of the second separation membrane unit 20 through the outlet 23b.

As described above, the gas mixture S1 includes the first gas and the second gas. The gas mixture S1 typically includes nitrogen as the first gas and carbon dioxide as the second gas. The gas mixture S1 is typically a gas discharged from a factory or a power plant. It should be noted that the gas separation system 100 of the present embodiment can also be used to separate the gas mixture S1 having a composition different from the above. For example, the first gas and the second gas may each be a gas selected from a nonpolar gas such as nitrogen, methane, oxygen, or hydrogen, an inert gas such as helium, and an acid gas other than carbon dioxide. Examples of the acid gas other than carbon dioxide include hydrogen sulfide, carbonyl sulfide, a sulfur oxide ($SO_x$), hydrogen cyanide, and a nitrogen oxide ($NO_x$).

The content of the second gas in the gas mixture S1 may be 30 vol% or less. As described above, for the pressurization type, compared to the depressurization type, the lower the carbon dioxide content in a supplied gas mixture is, the more likely the required separation power is to increase, and the more likely the required membrane area is to decrease. When the content of the second gas in the gas mixture S1 is 30 vol% or less, the required membrane area in the whole gas separation system 100 can be reduced.

The content of the second gas in the gas mixture S1 may be less than 30 vol%. The content of the second gas in the gas mixture S1 may be 25 vol% or less, 20 vol% or less, 15 vol% or less, or even 10 vol% or less.

In the gas mixture separation method of the present embodiment, the first separation step and the second separation step are preferably performed successively. That is, preferably, the first permeated gas S2 separated by the first separation step is immediately supplied to the second separation step without being collected into, for example, a tank. An amount of the gas mixture S1 to be processed per unit time can be increased easily by performing the first separation step and the second separation step successively.

The gas mixture separation method of the present embodiment may further include a recovery step in which the first non-permeated gas S3 obtained by the first separation step is recovered and another recovery step in which the second permeated gas S4 obtained by the second separation step is recovered.

(Mixing Step)

The separation method of the present embodiment further includes, for example, a mixing step in which the second non-permeated gas S5 and the gas mixture S1 are mixed. The mixing step can be performed by delivering the second non-permeated gas S5 to the joining point 51a of the gas mixture feed passage 51 through the third discharge passage 55. By the mixing step, the second non-permeated gas S5 can be reused and the recovery rates of the first gas and the second gas tend to be improved.

For example, the second permeated gas S4 in which the second gas is concentrated and the first non-permeated gas S3 in which the first gas is concentrated can be recovered by the gas mixture separation method of the present embodiment. The recovery rate of the second gas (e.g., carbon dioxide) by this separation method is, for example, but not particularly limited to, 80 wt% or more, preferably 90 wt% or more. The recovery rate of the first gas is, for example, but not particularly limited to, 90 wt% or more, preferably 95 wt% or more. The second permeated gas S4 in which carbon dioxide is concentrated can be used, for example, for manufacturing dry ice, etc. The first non-permeated gas S3 in which nitrogen is concentrated can be used, for example, in industrial applications.

Both reduction of the recovery power and reduction of the membrane area can be achieved by the gas separation system 100 of the present embodiment and the gas mixture separation method using the gas separation system 100. Accordingly, the gas separation system 100 of the present embodiment and the gas mixture separation method using the gas separation system 100 are suitable for achieving both reduction of the recovery power and reduction of the membrane area.

<Modification of Gas Separation System>

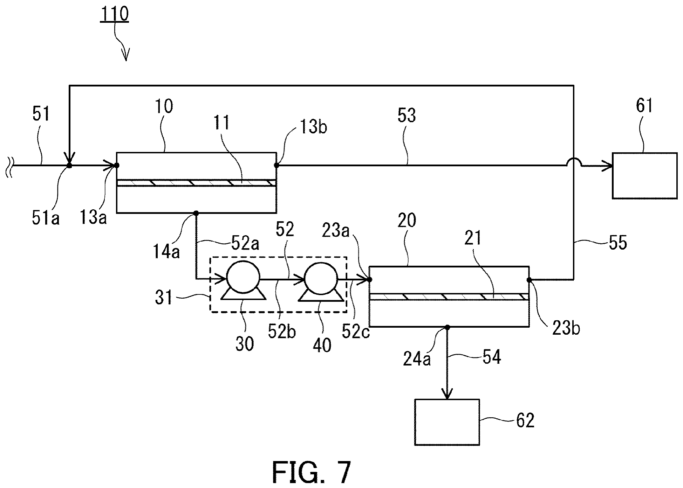

FIG. 7 is a schematic configuration diagram showing a modification of the gas separation system 100 described above. A gas separation system 110 of the modification includes a depressurizing unit 31 in which the depressurizing device 30 and the pressurizing device 40 are accommodated in a single container. Except for this, the configuration of the gas separation system 110 of the modification is the same as that of the gas separation system 100. Therefore, the elements common between the gas separation system 100 and the gas separation system 110 of the modification are denoted by the same reference characters, and the descriptions of such elements are omitted.

As shown in FIG. 7, the depressurizing unit 31 includes, for example, the depressurizing device 30, the pressurizing device 40, and the second portion 52b.

The depressurizing unit 31 may be configured to include, for example, a combination of a vacuum pump as the depressurizing device 30 and a booster pump as the pressurizing device 40.

EXAMPLES

Hereinafter, the present invention will be described in more detail by way of examples, but the present invention is not limited to these examples.

(Calculation Examples 1 to 4)

For Calculation Examples 1 to 4, operation of the gas separation system 100 shown in FIG. 1 was simulated. Specifically, it was assumed that carbon dioxide separation membranes as described above were included in the gas separation system 100 as the first separation membrane 11 included in the first separation membrane unit 10 and the second separation membrane 21 included in the second separation membrane unit 20. The permeation rate $T_1$ (GPU) of the second gas permeating through the first separation membrane 11, the separation factor $\alpha_1$ of the first separation membrane 11, the permeation rate $T_2$ (GPU) of the second gas permeating through the second separation membrane 21, and the separation factor $\alpha_2$ of the second separation membrane 21 were set as shown in Table 1. In addition, gas mixture feed conditions were set as follows.

[Gas Mixture Feed Conditions]

Composition (volume ratio): $N_2/CO_2$ = 90/10
Weight of $CO_2$: 1000 kg/hr
Pressure: 101.33 kPa
Temperature: 25°C

Additionally, it was assumed that in the operation of the gas separation system 100 in Calculation Examples 1 to 4, the permeation-side space of the first separation membrane unit 10 would be depressurized to 3 kPa using the depressurizing device 30 and the feed-side space of the second separation membrane unit 20 would be pressurized to 900 kPa using the pressurizing device 40. The operation efficiency of the depressurizing device 30 was set to 40%, and the operation efficiency of the pressurizing device 40 was set to 70%.

For Calculation Examples 1 to 4, the recovery power (MWh/t-$CO_2$) for carbon dioxide and the required total membrane area ($m^2$) were calculated when the following hypothetical conditions were met. For the calculation, Symmetry, a process modeling software available from Schlumberger Ltd., was used. It should be noted that the recovery power for carbon dioxide refers to energy required to operate the gas separation system per ton of the carbon dioxide contained in the second permeated gas S4.

[Hypothetical Conditions]

The carbon dioxide content in the second permeated gas S4 discharged from the second separation membrane unit 20 is 95 vol%.

The recovery rate of carbon dioxide by the gas separation system 100 is 90 wt%.

(Calculation Examples 5 to 8)

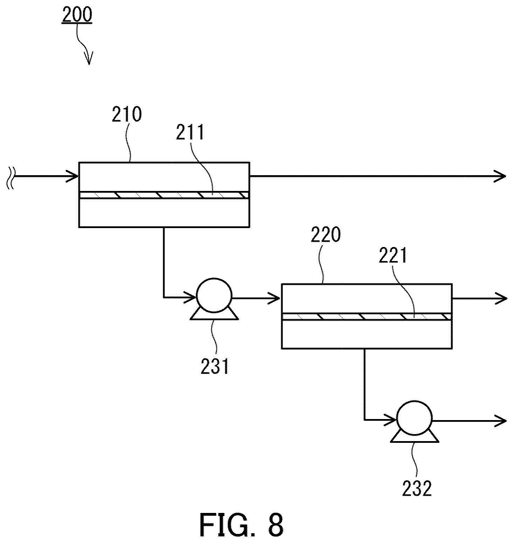

For Calculation Examples 5 to 8, operation of a gas separation system 200 shown in FIG. 8 was simulated. The gas separation system 200 has the same configuration as that of the gas separation system 100 shown in FIG. 1, except that the permeation-side space of a second separation membrane unit 220 is depressurized using a second depressurizing device 232. That is, the gas separation system 200 does not include a pressurizing device that pressurizes the feed-side space of the second separation membrane unit 220. Specifically, it was assumed that carbon dioxide separation membranes as used in Calculation Example 1 were included in the gas separation system 200 as a first separation membrane 211 included in a first separation membrane unit 210 and a second separation membrane 221 included in the second separation membrane unit 220. The permeation rate $T_1$ (GPU) of the second gas permeating through the first separation membrane 211, the separation factor $\alpha_1$ of the first separation membrane 211, the permeation rate $T_2$ (GPU) of the second gas permeating through the second separation membrane 221, and the separation factor $\alpha_2$ of the second separation membrane 221 were set as shown in Table 1. The gas mixture feed conditions were the same as those in Calculation Example 1.

Additionally, it was assumed that in the operation of the gas separation system 200 in Calculation Examples 5 to 8, the permeation-side space of the first separation membrane unit 210 would be depressurized to 3 kPa using the first depressurizing device 231 and the permeation-side space of the second separation membrane unit 220 would be depressurized to 3 kPa using the second depressurizing device 232. The operation efficiencies of the first depressurizing device 231 and the second depressurizing device 232 were set to 40%.

For Calculation Examples 5 to 8, the recovery power (MWh/t-$CO_2$) for carbon dioxide and the required total membrane area ($m^2$) were calculated when the above hypothetical conditions for Calculation Examples 1 to 4 were met.

(Calculation Examples 9 to 12)

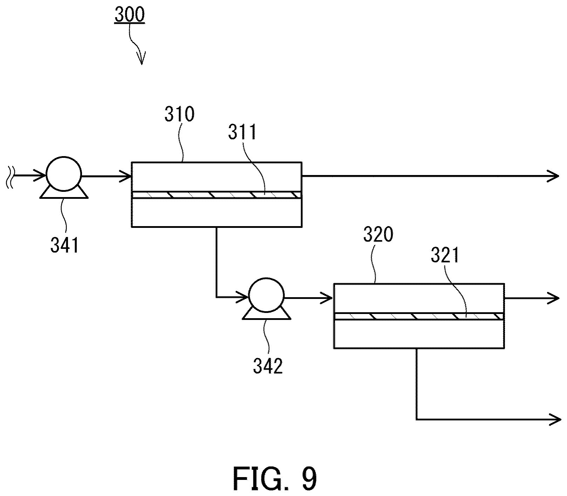

For Calculation Examples 9 to 12, operation of a gas separation system 300 shown in FIG. 9 was simulated. The gas separation system 300 has the same configuration as that of the gas separation system 100 shown in FIG. 1, except that the feed-side space of a first separation membrane unit 310 is pressurized using a first pressurizing device 341. That is, the gas separation system 300 does not include a depressurizing device that depressurizes the permeation-side space of the first separation membrane unit 310. Specifically, it was assumed that carbon dioxide separation membranes as used in Calculation Example 1 were included in the gas separation system 300 as a first separation membrane 311 included in the first separation membrane unit 310 and a second separation membrane 321 included in a second separation membrane unit 320. The permeation rate T1 (GPU) of the second gas permeating through the first separation membrane 311, the separation factor $\alpha_1$ of the first separation membrane 311, the permeation rate T2 (GPU) of the second gas permeating through the second separation membrane 321, and the separation factor $\alpha_2$ of the second separation membrane 321 were set as shown in Table 1. The gas mixture feed conditions were the same as those in Calculation Example 1.

Additionally, it was assumed that in the operation of the gas separation system 300 in Calculation Examples 9 to 12, the feed-side space of the first separation membrane unit 310 would be pressurized to 900 kPa using the first pressurizing device 341 and the feed-side space of the second separation membrane unit 320 would be pressurized to 900 kPa using a second pressurizing device 342. The operation efficiencies of the first pressurizing device 341 and the second pressurizing device 342 were set to 70%.

For Calculation Examples 9 to 12, the recovery power (MWh/t-$CO_2$) for carbon dioxide and the required total membrane area ($m^2$) were calculated when the above hypothetical conditions for Calculation Examples 1 to 4 were met.

Table 1 shows the simulation results for Calculation Examples 1 to 12.

[Table 1]

| Separation system | Calculation Example | First separation membrane | | | Second separation membrane | | | Recovery power | First separation membrane | Second separation membrane | Total membrane area |
| | | Pressure in permeation-side space [kPa] | Permeation rate $T_1$ [GPU] | Separation factor $\alpha_1$ | Pressure in feed-side space [kPa] | Permeation rate $T_2$ [GPU] | Separation factor $\alpha_2$ | [MWh/t-$CO_2$] | Membrane area $M_1$ [$m^2$] | Membrane area $M_2$ [$m^2$] | [$m^2$] |
|---|---|---|---|---|---|---|---|---|---|---|---|
| 100 | 1 | 3 | 800 | 30 | 900 | 800 | 30 | 0.90 | 9978 | 69 | 10047 |
| | 2 | 3 | 800 | 30 | 900 | 100 | 50 | 0.76 | 9136 | 770 | 9906 |
| | 3 | 3 | 100 | 50 | 900 | 800 | 30 | 0.62 | 81428 | 69 | 81496 |
| | 4 | 3 | 100 | 50 | 900 | 100 | 50 | 0.56 | 77758 | 772 | 78530 |
| 200 | 5 | 3 | 800 | 30 | 900 | 800 | 30 | 0.85 | 9526 | 556 | 10082 |
| | 6 | 3 | 800 | 30 | 900 | 100 | 50 | 0.75 | 8758 | 6270 | 15028 |
| | 7 | 3 | 100 | 50 | 900 | 800 | 30 | 0.66 | 79096 | 556 | 79652 |
| | 8 | 3 | 100 | 50 | 900 | 100 | 50 | 0.62 | 75776 | 6270 | 82046 |
| 300 | 9 | 3 | 800 | 30 | 900 | 800 | 30 | 1.81 | 3776 | 69 | 3845 |
| | 10 | 3 | 800 | 30 | 900 | 100 | 50 | 1.59 | 3462 | 770 | 4232 |
| | 11 | 3 | 100 | 50 | 900 | 800 | 30 | 1.57 | 38492 | 69 | 38561 |
| | 12 | 3 | 100 | 50 | 900 | 100 | 50 | 1.41 | 36118 | 773 | 36891 |

As shown in Table 1, among Calculation Examples 1 to 4 where the gas separation system 100 shown in FIG. 1 was assumed, Calculation Example 2 satisfy $\alpha_1 < \alpha_2$. On the other hand, Calculation Examples 1, 3, and 4 do not satisfy $\alpha_1 < \alpha_2$. Moreover, for Calculation Examples 5 to 8, the gas separation system 200 shown in FIG. 8 instead of the gas separation system 100 shown in FIG. 1 was assumed. For Calculation Examples 9 and 12, the gas separation system 300 shown in FIG. 9 instead of the gas separation system 100 shown in FIG. 1 was assumed. That is, Calculation Example 2 corresponds to an example, and Calculation Examples 1 and 3 to 12 correspond to comparative examples. As can be understood by comparison between the simulation results shown in Table 1, both reduction of the recovery power and reduction of the membrane area were able to be achieved in Calculation Example 2.

(Calculation Examples 13 to 15)

Next, for Calculation Examples 13 to 15, operation of the gas separation system 100 shown in FIG. 1 was simulated such that the total membrane area was fixed, to examine how the permeation rate $T_2$ (GPU), the separation factor $\alpha_2$, and the recovery power (MWh/t-$CO_2$) for carbon dioxide vary when the above hypothetical conditions for Calculation Examples 1 to 4 were met. Specifically, it was assumed that carbon dioxide separation membranes as used in Calculation Examples 1 to 4 were included in the gas separation system 100 as the first separation membrane 11 and the second separation membrane 21. The permeation rate $T_1$ (GPU) and the separation factor $\alpha_1$ were set as shown in Table 2. The gas mixture feed conditions were the same as those in Calculation Examples 1 to 4.

(Calculation Examples 16 to 19)

For Calculation Examples 16 to 19, operation of the gas separation system 100 shown in FIG. 1 was simulated so that a requirement that the permeation rate $T_1$ is greater than the permeation rate $T_2$ would be satisfied, to examine how the recovery power (MWh/t-$CO_2$) and the total membrane area ($m^2$) vary when the above hypothetical conditions for Calculation Examples 1 to 4 were met. Specifically, it was assumed that carbon dioxide separation membranes as used in Calculation Examples 1 to 4 were included in the gas separation system 100 as the first separation membrane 11 and the second separation membrane 21. The permeation rate $T_1$ (GPU), the separation factor $\alpha_1$, the permeation rate $T_2$ (GPU), and the separation factor $\alpha_2$ were set as shown in Table 2. The gas mixture feed conditions were the same as those in Calculation Examples 1 to 4.

Additionally, it was assumed that in the operation of the gas separation system 100 in Calculation Examples 16 to 19, the permeation-side space of the first separation membrane unit 10 would be depressurized to 3 kPa using the depressurizing device 30 and the feed-side space of the second separation membrane unit 20 would be pressurized to 900 kPa using the pressurizing device 40. The operation efficiency of the depressurizing device 30 was set to 40%, and the operation efficiency of the pressurizing device 40 was set to 70%.

Table 2 shows the simulation results for Calculation Examples 13 to 19.

[Table 2]

| Separation system | Calculation Example | First separation membrane | | Second separation membrane | | Recovery power | First separation membrane | Second separation membrane | Total membrane area |
|---|---|---|---|---|---|---|---|---|---|
| | | Permeation rate $T_1$ [GPU] | Separation factor $\alpha_1$ | Permeation rate $T_2$ [GPU] | Separation factor $\alpha_2$ | [MWh/ t-$CO_2$] | Membrane area $M_1$ [$m^2$] | Membrane area $M_2$ [$m^2$] | [$m^2$] |
| 100 | 13 | 800 | 30 | 800 | 30 | 0.90 | 9978 | 69 | 10047 |
| | 14 | 800 | 30 | 110 | 40 | 0.81 | 9449 | 598 | 10047 |
| | 15 | 800 | 30 | 86 | 50 | 0.76 | 9152 | 895 | 10047 |
| | 16 | 800 | 30 | 100 | 20 | 1.10 | 10959 | 435 | 11394 |
| | 17 | 800 | 30 | 100 | 30 | 0.90 | 9977 | 548 | 10525 |
| | 18 | 800 | 30 | 100 | 40 | 0.81 | 9449 | 659 | 10108 |
| | 19 | 800 | 30 | 100 | 50 | 0.76 | 9136 | 770 | 9906 |

As shown in Table 2, among Calculation Examples 13 to 15, Calculation Examples 14 and 15 satisfy $\alpha_1 < \alpha_2$. On the other hand, Calculation Example 13 does not satisfy $\alpha_1 < \alpha_2$. That is, Calculation Examples 14 to 15 correspond to examples, and Calculation Examples 13 corresponds to a comparative example. As can be understood by comparison between the simulation results shown in Table 2, the recovery power is 0.81 MWh/t-$CO_2$ or less in Calculation Examples 14 and 15, which achieved a greater reduction in recovery power compared to Calculation Example 13. Specifically, when the total membrane area was fixed in the operation of the gas separation system 100 shown in FIG. 1, the permeation rate $T_2$ of the second separation membrane 21 was able to be decreased by increasing the selectivity of the second separation membrane relative to that of the first separation membrane, i.e., by increasing the separation factor $\alpha_2$ of the second separation membrane 21, and, as a result, the recovery power was able to be reduced.

As shown in Table 2, among Calculation Examples 16 to 19, Calculation Examples 18 and 19 satisfy $\alpha_1 < \alpha_2$. On the other hand, Calculation Examples 16 and 17 do not satisfy $\alpha_1 < \alpha_2$. That is, Calculation Examples 18 and 19 correspond to examples, and Calculation Examples 16 and 17 correspond to comparative examples. As can be understood by comparison between the simulation results shown in Table 2, the recovery power is 0.81 MWh/t-$CO_2$ or less and the total membrane area is 10108 $m^2$ or less in Calculation Examples 18 and 19, which achieved greater reductions in both recovery power and total membrane area compared to Calculation Examples 16 and 17. Specifically, when the gas separation system 100 shown in FIG. 1 was operated such that the requirement that the permeation rate $T_1$ is greater than the permeation rate $T_2$ was satisfied, both the recovery power and the total membrane area were able to be reduced by increasing the selectivity of the second separation membrane relative to that of the first separation membrane, i.e., by increasing the separation factor $\alpha_2$ of the second separation membrane 21.

(Calculation Examples 20 and 21)

Next, for Calculation Examples 20 and 21, operation of the gas separation system 100 shown in FIG. 1 was simulated assuming that, of the gas mixture feed conditions, the composition of the gas mixture was changed, to examine how the recovery power (MWh/t-$CO_2$) and the total membrane area ($m^2$) vary when the above hypothetical conditions for Calculation Examples 1 to 4 were met. Specifically, it was assumed that carbon dioxide separation membranes as used in Calculation Examples 1 to 4 were included in the gas separation system 100 as the first separation membrane 11 and the second separation membrane 21. The content (vol%) of carbon dioxide in the gas mixture, the permeation rate $T_1$ (GPU), the separation factor $\alpha_1$, the permeation rate $T_2$ (GPU), and the separation factor $\alpha_2$ were set as shown in Table 3. The gas mixture feed conditions other than the composition of the gas mixture were the same as those in Calculation Examples 1 to 4.

Additionally, it was assumed that in the operation of the gas separation system 100 in Calculation Examples 20 to 21, the permeation-side space of the first separation membrane unit 10 would be depressurized to 3 kPa using the depressurizing device 30 and the feed-side space of the second separation membrane unit 20 would be pressurized to 900 kPa using the pressurizing device 40. The operation efficiency of the depressurizing device 30 was set to 40%, and the operation efficiency of the pressurizing device 40 was set to 70%.

(Calculation Examples 22 and 23)

For Calculation Examples 22 and 23, operation of the gas separation system 300 shown in FIG. 9 was simulated assuming that, of the gas mixture feed conditions, the composition of the gas mixture was changed, to examine how the recovery power (MWh/t-$CO_2$) and the total membrane area ($m^2$) vary when the above hypothetical conditions for Calculation Examples 1 to 4 were met. Specifically, it was assumed that carbon dioxide separation membranes as used in Calculation Examples 1 to 4 were included in the gas separation system 300 as the first separation membrane 311 and the second separation membrane 321. The content (vol%) of carbon dioxide in the gas mixture, the permeation rate $T_1$ (GPU), the separation factor $\alpha_1$, the permeation rate $T_2$ (GPU), and the separation factor $\alpha_2$ were set as shown in Table 3. The gas mixture feed conditions other than the composition of the gas mixture were the same as those in Calculation Examples 1 to 4.

Additionally, it was assumed that in the operation of the gas separation system 300 in Calculation Examples 22 and 23, the feed-side space of the first separation membrane unit 310 would be pressurized to 900 kPa using the first pressurizing device 341 and the feed-side space of the second separation membrane unit 320 would be pressurized to 900 kPa using the second pressurizing device 342. The operation efficiencies of the first pressurizing device 341 and the second pressurizing device 342 were set to 70%.

Table 3 shows the simulation results for Calculation Examples 20 to 23.

[Table 3]

| Separation system | Calculation Example | CO$_2$ content in gas mixture [vol%] | First separation membrane | | Second separation membrane | | Recovery power [MWh/ t-CO$_2$] | First separation membrane Membrane area M$_1$ [m$^2$] | Second separation membrane Membrane area M$_2$ [m$^2$] | Total membrane area [m$^2$] |
|---|---|---|---|---|---|---|---|---|---|---|
| | | | Permeation rate T$_1$ [GPU] | Separation factor $\alpha_1$ | Permeation rate T$_2$ [GPU] | Separation factor $\alpha_2$ | | | | |
| 100 | 20 | 10 | 800 | 30 | 100 | 50 | 0.76 | 9136 | 770 | 9906 |
| | 21 | 20 | 800 | 30 | 100 | 50 | 0.42 | 3387 | 770 | 4157 |
| 300 | 22 | 10 | 800 | 30 | 100 | 50 | 1.59 | 3462 | 770 | 4232 |
| | 23 | 20 | 800 | 30 | 100 | 50 | 0.62 | 1004 | 773 | 1777 |

As shown in Table 3, Calculation Examples 20 and 21 and Calculation Examples 22 and 23 each satisfy $\alpha_1 < \alpha_2$. Note that, in Calculation Examples 22 and 23, the gas separation system 300 shown in FIG. 9 instead of the gas separation system 100 shown in FIG. 1 was assumed. That is, Calculation Examples 20 and 21 correspond to examples, and Calculation Examples 22 and 23 correspond to comparative examples. As can be understood by comparison between the simulation result for Calculation Example 20 and the simulation result for Calculation Example 22, the recovery power is 0.76 MWh/t-$CO_2$ and the total membrane area is 9906 $m^2$ or less in Calculation Example 20; Calculation Example 20 has an advantage over Calculation Example 22 in achieving both reduction of the recovery power and reduction of the membrane area. This result reveals that at least when the carbon dioxide content in the gas mixture is 10 vol% or less, both reduction of the recovery power and reduction of the membrane area can be achieved excellently by operating the gas separation system 100 shown in FIG. 1 to satisfy $\alpha_1 < \alpha_2$. Moreover, as can be understood by comparison between the simulation results for Calculation Examples 21 and 23, the recovery power in Calculation Example 21 is approximately half the recovery power in Calculation Example 23, and the total membrane area in Calculation Example 21 is approximately twice the total membrane area in Calculation Example 23. It should be noted that membrane replacement cost is generally lower than power cost of a system; it can be said that Calculation Example 21 has an advantage over Calculation Example 23 in total system operation cost. This result reveals that at least when the carbon dioxide content in the gas mixture is 20 vol% or less, an excellent total system operation cost performance can be achieved by operating the gas separation system 100 shown in FIG. 1 to satisfy $\alpha_1 < \alpha_2$.

(Calculation Examples 24 and 26)

Next, for Calculation Examples 24 to 26, simulation of the gas separation system 100 shown in FIG. 1 was performed at varied pressures in the permeation-side space of the first separation membrane unit 10 and varied pressures in the feed-side space of the second separation membrane unit 20, and the recovery power (MWh/t-$CO_2$) for carbon dioxide and the required total membrane area ($m^2$) were calculated when the above hypothetical conditions for Calculation Examples 1 to 4 were met. Specifically, it was assumed that carbon dioxide separation membranes as used in Calculation Examples 1 to 4 were included in the gas separation system 100 as the first separation membrane 11 and the second separation membrane 21. The permeation rate $T_1$ (GPU), the separation factor $\alpha_1$, the permeation rate $T_2$ (GPU), and the separation factor $\alpha_2$ were set as shown in Table 4. The gas mixture feed conditions were the same as those in Calculation Examples 1 to 4.

Table 4 shows the simulation results for Calculation Examples 24 to 26 as well as the simulation result for Calculation Example 2.

[Table 4]

| Separation system | Calculation Example | First separation membrane | | | Second separation membrane | | | Recovery power | First separation membrane | Second separation membrane | Total membrane area |
|---|---|---|---|---|---|---|---|---|---|---|---|
| | | Pressure in permeation-side space [kPa] | Permeation rate $T_1$ [GPU] | Separation factor $\alpha_1$ | Pressure in feed-side space [kPa] | Permeation rate $T_2$ [GPU] | Separation factor $\alpha_2$ | [MWh/t-$CO_2$] | Membrane area $M_1$ [m²] | Membrane area $M_2$ [m²] | [m²] |
| 100 | 23 | 3 | 800 | 30 | 900 | 100 | 50 | 0.76 | 9136 | 770 | 9906 |
| | 24 | 3 | 800 | 30 | 1100 | 100 | 50 | 0.77 | 9056 | 617 | 9673 |
| | 25 | 3 | 800 | 30 | 1300 | 100 | 50 | 0.77 | 8987 | 514 | 9501 |
| | 26 | 3 | 800 | 30 | 1500 | 100 | 50 | 0.78 | 8934 | 441 | 9375 |
| | 27 | 1 | 800 | 30 | 700 | 100 | 50 | 0.84 | 6631 | 1030 | 7661 |
| | 28 | 1 | 800 | 30 | 900 | 100 | 50 | 0.84 | 6524 | 771 | 7295 |
| | 29 | 1 | 800 | 30 | 1100 | 100 | 50 | 0.84 | 6456 | 618 | 7074 |
| | 30 | 1 | 800 | 30 | 1300 | 100 | 50 | 0.85 | 6420 | 514 | 6934 |
| | 31 | 1 | 800 | 30 | 1500 | 100 | 50 | 0.85 | 6392 | 441 | 6833 |
| | 32 | 2 | 800 | 30 | 700 | 100 | 50 | 0.77 | 7877 | 1030 | 8907 |
| | 33 | 2 | 800 | 30 | 900 | 100 | 50 | 0.77 | 7739 | 771 | 8510 |
| | 34 | 2 | 800 | 30 | 1100 | 100 | 50 | 0.77 | 7659 | 618 | 8276 |
| | 35 | 2 | 800 | 30 | 1300 | 100 | 50 | 0.78 | 7598 | 514 | 8112 |
| | 36 | 2 | 800 | 30 | 1500 | 100 | 50 | 0.78 | 7577 | 440 | 8017 |

As shown in Table 4, Calculation Examples 24 to 36 satisfy $\alpha_1 < \alpha_2$. As can be understood by comparison between the simulation results shown in Table 2, both reduction of the recovery power and reduction of the membrane area were able to be achieved at the varied pressures in the permeation-side space of the first separation membrane unit 10 and the varied pressures in the feed-side space of the second separation membrane unit 20. Specifically, regardless of whether the pressure in the permeation-side space of the first separation membrane unit 10 was fixed to 3 kPa, 2 kPa, and 1 kPa, an increase in recovery power was able to be suppressed and the total membrane area was able to be reduced by increasing the pressure in the feed-side space of the second separation membrane unit 20.

[Simulation Using Moisture-Saturated Gas Mixture]

Furthermore, for Calculation Examples 1 to 11, simulation was performed using a moisture-saturated gas mixture, and the recovery power (MWh/t-$CO_2$) for carbon dioxide and the required total membrane area ($m^2$) were calculated. The gas mixture feed conditions were set as follows.

[Gas Mixture Feed Conditions]

Composition (volume ratio): $N_2/CO_2/O_2/H_2O$ = 82/10/5/3
Weight of $CO_2$: 1000 kg/hr
Pressure: 101.33 kPa
Temperature: 25°C

The $H_2O$ permeabilities of the first separation membrane 11 and the second separation membrane 21 were three times the $CO_2$ permeabilities thereof.

Table 5 shows the simulation results for Calculation Examples 1 to 11 in the case of using the moisture-saturated gas mixture. Table 5 also shows the simulation results ($N_2/CO_2$ = 90/10) shown in Table 1.

[Table 5]

| Separation system | Composition of gas mixture (Volume ratio) | $N_2/CO_2$ = 90/10 | | $N_2/CO_2/O_2/H_2O$ = 82/10/5/3 | |
|---|---|---|---|---|---|
| | Calculation Example | Recovery power [MWh/t-$CO_2$] | Total membrane area [$m^2$] | Recovery power [MWh/t-$CO_2$] | Total membrane area [$m^2$] |
| 100 | 1 | 0.90 | 10047 | 1.08 | 10137 |
| | 2 | 0.76 | 9906 | 0.87 | 9595 |
| | 3 | 0.62 | 81496 | 0.73 | 78003 |
| | 4 | 0.56 | 78530 | 0.64 | 73309 |
| 200 | 5 | 0.85 | 10082 | 1.37 | 12306 |
| | 6 | 0.75 | 15028 | 1.02 | 13684 |
| | 7 | 0.66 | 79652 | 0.93 | 90948 |
| | 8 | 0.62 | 82046 | 0.74 | 83330 |
| 300 | 9 | 1.81 | 3845 | 1.99 | 3808 |
| | 10 | 1.59 | 4232 | 1.71 | 4059 |
| | 11 | 1.57 | 38561 | 1.69 | 37606 |

As can be understood by comparison between the simulation results shown in Table 5, for Calculation Example 2 corresponding to an example, both reduction of the recovery power and reduction of the total membrane area were achieved even when the moisture-saturated gas mixture was used. For Calculation Examples 1 to 4 where the gas separation system 100 shown in FIG. 1 was assumed, an increase in recovery power was able to be suppressed and the total membrane area was able to be reduced by using the moisture-saturated gas mixture. For Calculation Examples 9 to 11 where the gas separation system 300 shown in FIG. 9 was assumed, no significant differences were found in recovery power and total membrane area in the case of using the moisture-saturated gas mixture. This is presumably because, in the gas separation system 300, the moisture contained in the gas mixture was condensed by compression using the first pressurizing device 341 and discharged and the moisture contained in the first permeated gas was condensed by compression using the second pressurizing device 342 and discharged. On the other hand, for Calculation Examples 5 to 8 where the gas separation system 200 shown in FIG. 8 was assumed, both the recovery power and the total membrane area tended to increase when the moisture-saturated gas mixture was used. This is presumably because, in the gas separation system 200, the gas mixture still containing moisture was supplied to the first depressurizing device 231 and the first permeated gas still containing moisture was supplied to the second depressurizing device 232.

In EXAMPLES, cases where the gas mixture contained nitrogen as the first gas and carbon dioxide as the second gas were simulated. However, the gas mixture is not limited to the gas mixture used in EXAMPLES.

INDUSTRIAL APPLICABILITY

The gas separation system of the present embodiment is suitable for separating a gas mixture, such as a gas mixture containing carbon dioxide and nitrogen. In particular, the gas separation system of the present embodiment is suitable for efficiently recovering carbon dioxide from a gas discharged from a combustion apparatus in a factory, a power plant, or the like.

**Claims**

1. A gas separation system comprising:

   a first separation membrane unit accommodating a first separation membrane that separates a gas mixture into a first permeated gas and a first non-permeated gas;
   a second separation membrane unit accommodating a second separation membrane that separates the first permeated gas into a second permeated gas and a second non-permeated gas;
   a depressurizing device that depressurizes a permeation-side space of the first separation membrane unit; and
   a pressurizing device that pressurizes a feed-side space of the second separation membrane unit, wherein
   the gas mixture contains a first gas and a second gas different from the first gas,
   the first separation membrane and the second separation membrane are preferentially permeable to the second gas, and
   a separation factor $\alpha_1$ of the first separation membrane for the second gas with respect to the first gas and a separation factor $\alpha_2$ of the second separation membrane for the second gas with respect to the first gas satisfy $\alpha_1 < \alpha_2$, the separation factors $\alpha_1$ and $\alpha_2$ being determined by a test below.
   Test: A test piece is fabricated from the first separation membrane or the second separation membrane. An operation is performed in which a test gas composed of the first gas and the second gas is supplied to a space adjacent to one surface of the test piece while a space adjacent to the other surface of the test piece is depressurized. The separation factor $\alpha_1$ or $\alpha_2$ is determined on the basis of a result of the operation. In the operation, a content of the second gas in the test gas is 50 vol% under standard conditions, the test gas supplied to the space adjacent to the one surface has a temperature of 30°C and a pressure of 0.1 MPa, and the space adjacent to the other surface is depressurized to reduce a pressure in the space adjacent to the other surface to 0.1 MPa below an atmospheric pressure in a measurement environment.

2. The gas separation system according to claim 1, wherein a content of the second gas in the gas mixture is 30 vol% or less.

3. The gas separation system according to claim 1, wherein the gas mixture contains nitrogen as the first gas and carbon dioxide as the second gas.

4. The gas separation system according to claim 1, wherein a membrane area of the first separation membrane is larger than a membrane area of the second separation membrane.

5. The gas separation system according to claim 1, satisfying $10 \leq \alpha_2 - \alpha_1 \leq 30$.

6. The gas separation system according to claim 1, satisfying $10 \leq \alpha_1 \leq 30$.

7. The gas separation system according to claim 1, being a continuous-type system.

8. The gas separation system according to claim 1, further comprising

a permeated gas feed passage connected to the first separation membrane unit and the second separation membrane unit and configured to supply the first permeated gas to the second separation membrane unit, wherein
the depressurizing device and the pressurizing device are disposed in the permeated gas feed passage.

9. The gas separation system according to claim 1, further comprising:

a gas mixture feed passage connected to the first separation membrane unit and configured to supply the gas mixture to the first separation membrane unit; and
a discharge passage connected to the second separation membrane unit and configured to discharge the second non-permeated gas from the second separation membrane unit, wherein
the discharge passage joins the gas mixture feed passage at a joining point.

10. A gas mixture separation method, comprising:

a first separation step of separating a gas mixture into a first permeated gas and a first non-permeated gas by supplying the gas mixture to a first separation membrane unit and depressurizing a permeation-side space of the first separation membrane unit, the first separation membrane unit accommodating a first separation membrane; and
a second separation step of separating the first non-permeated gas into a second permeated gas and a second non-permeated gas by supplying the first permeated gas to a second separation membrane unit and pressurizing a feed-side space of the second separation membrane unit, the second separation membrane unit accommodating a second separation membrane, wherein
the gas mixture contains a first gas and a second gas different from the first gas,
the first separation membrane and the second separation membrane are preferentially permeable to the second gas, and
a separation factor $\alpha_1$ of the first separation membrane for the second gas with respect to the first gas and a separation factor $\alpha_2$ of the second separation membrane for the second gas with respect to the first gas satisfy $\alpha_1 < \alpha_2$, the separation factors $\alpha_1$ and $\alpha_2$ being determined by a test below.
Test: A test piece is fabricated from the first separation membrane or the second separation membrane. An operation is performed in which a test gas composed of the first gas and the second gas is supplied to a space adjacent to one surface of the test piece while a space adjacent to the other surface of the test piece is depressurized. The separation factor $\alpha_1$ or $\alpha_2$ is determined on the basis of a result of the operation. In the operation, a content of the second gas in the test gas is 50 vol% under standard conditions, the test gas supplied to the space adjacent to the one surface has a temperature of 30°C and a pressure of 0.1 MPa, and the space adjacent to the other surface is depressurized to reduce a pressure in the space adjacent to the other surface to 0.1 MPa below an atmospheric pressure in a measurement environment.

11. The gas mixture separation method according to claim 10, wherein a content of the second gas in the gas mixture is 30 vol% or less.

12. The gas mixture separation method according to claim 10, wherein the gas mixture contains nitrogen as the first gas and carbon dioxide as the second gas.

FIG. 1

FIG. 2

FIG. 3

FIG. 4

FIG. 5

FIG. 6

FIG. 7

FIG. 8

FIG. 9

## INTERNATIONAL SEARCH REPORT

| International application No. |
|---|
| **PCT/JP2024/009898** |

**A. CLASSIFICATION OF SUBJECT MATTER**

***B01D 53/22***(2006.01)i; ***B01D 61/58***(2006.01)i
FI: B01D53/22; B01D61/58

According to International Patent Classification (IPC) or to both national classification and IPC

**B. FIELDS SEARCHED**

Minimum documentation searched (classification system followed by classification symbols)

B01D53/22, 61/00-78

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2022/030267 A1 (NITTO DENKO CORPORATION) 10 February 2022 (2022-02-10) paragraphs [0014]-[0164], fig. 1 | 1-12 |
| Y | JP 2008-137847 A (AIR LIQUIDE JAPAN, LTD.) 19 June 2008 (2008-06-19) paragraph [0066], fig. 2 | 1-12 |
| Y | JP 5-508104 A (MEMBRANE TECHNOLOGY & RESEARCH INC.) 18 November 1993 (1993-11-18) p. 9, lower left column, line 20 to lower right column, line 4, fig. 3 | 1-12 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 April 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/009898**

| Patent document cited in search report | | | Publication date (day/month/year) | Patent family member(s) | | | Publication date (day/month/year) |
|---|---|---|---|---|---|---|---|
| WO | 2022/030267 | A1 | 10 February 2022 | US paragraphs [0033]-[0197], fig. 1 | 2023/0294039 | A1 | |
| | | | | EP | 4194076 | A1 | |
| | | | | CN | 116056778 | A | |
| JP | 2008-137847 | A | 19 June 2008 | US paragraph [0102], fig. 2 | 2010/0074820 | A1 | |
| | | | | WO | 2008/065633 | A1 | |
| | | | | KR | 10-2009-0085082 | A | |
| | | | | CN | 101547857 | A | |
| JP | 5-508104 | A | 18 November 1993 | WO p. 33, lines 14-25, fig. 3 | 1992/019358 | A1 | |

Form PCT/ISA/210 (patent family annex) (July 2022)

## REFERENCES CITED IN THE DESCRIPTION

**Patent documents cited in the description**

- JP 2020501884 A

**Non-patent literature cited in the description**

- **E. KAMIO et al.** *Adv. Mater*, 2017, vol. 29, 1704118